(19) Europäisches Patentamt
European Patent Office
Office européen des brevets

(11) **EP 4 321 031 A1**

(12) **EUROPEAN PATENT APPLICATION**
published in accordance with Art. 153(4) EPC

(43) Date of publication:
**14.02.2024 Bulletin 2024/07**

(21) Application number: **22784726.6**

(22) Date of filing: **08.04.2022**

(51) International Patent Classification (IPC):
*A23F 3/26* (2006.01)  *A23F 5/24* (2006.01)
*A23F 5/32* (2006.01)  *A23L 2/00* (2006.01)
*A23L 2/38* (2021.01)

(52) Cooperative Patent Classification (CPC):
**A23F 3/26; A23F 5/24; A23F 5/32; A23L 2/00;
A23L 2/38**

(86) International application number:
**PCT/JP2022/017331**

(87) International publication number:
**WO 2022/215744 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.04.2021   JP 2021066162
08.04.2021   JP 2021066163
08.04.2021   JP 2021066164
08.04.2021   JP 2021066165**

(71) Applicant: **The Coca-Cola Company
Atlanta, GA 30313 (US)**

(72) Inventors:
• **TASHIRO, Yohei
Tokyo 135-0064 (JP)**
• **WADA, Shingo
Tokyo 135-0064 (JP)**

(74) Representative: **Dehns
St. Bride's House
10 Salisbury Square
London EC4Y 8JD (GB)**

(54) **FREEZE-DRIED BEVERAGE SOLIDIFIED PRODUCT**

(57)   A freeze-dried beverage solidified product to be mixed with water or hot water in order to prepare a beverage, the beverage solidified product comprising dextrin, wherein the contained amount of sugars in the beverage solidified product is 8.5 mass% or less.

[Figure 1]

EP 4 321 031 A1

**Description**

**TECHNICAL FIELD**

The present invention relates to a freeze-dried beverage solidified product.

More specifically, the present invention relates to a freeze-dried beverage solidified product that is mixed with water or hot water to prepare a beverage.

More specifically, the present invention also relates to a freeze-dried green tea beverage solidified product that is mixed with water or hot water to prepare a better-tasting green tea beverage.

More specifically, the present invention also relates to a freeze-dried grain tea solidified product that is mixed with water or hot water to prepare a better-tasting grain tea beverage.

More specifically, the present invention also relates to a freeze-dried coffee solidified product that is mixed with water or hot water to prepare a better-tasting coffee beverage.

**BACKGROUND ART**

Instant coffee and tea that are made by dissolving a powder in water or hot water are known examples of beverages that can be provided instantly, in response to consumer demand.

Patent Document 1, for example, discloses dried tea in the form of pellets. Patent Document 2 also discloses food in the form of "mini-blocks," which are miniaturized food.

**PRIOR ART DOCUMENTS**

**PATENT DOCUMENTS**

Patent Document 1: Japanese Unexamined Patent Application S61-152238
Patent Document 2: Japanese Unexamined Patent Application 2003-52316

**DISCLOSURE OF THE INVENTION**

However, the art of Patent Document 1 requires the addition of saccharides to a tea extract so that the degree Brix of the extract ranges from 20 to 30. Patent Document 1, in fact, discloses the combined use of dextrin and lactose monohydrate or maltose starch syrup (Examples 1 through 3).

The art of Patent Document 2 also involves adding saccharides and starch and/or dextrin to a tea extract. Patent Document 2, in fact, discloses the combined use of tapioca starch, sorbitol, and dextrin (Example 1).

As the prior art thus requires the use of saccharides to provide instant dried beverages, sugar-free beverages cannot be provided.

A first object of the present invention is therefore to provide a novel beverage solidified product that is portable and that can be mixed with water or hot water to easily prepare a sugar-free beverage.

A second object of the present invention is to provide a novel green tea beverage solidified product that is portable and that can be mixed with water or hot water to easily prepare a better-tasting sugar-free green tea beverage.

A third object of the present invention is to provide a novel grain tea beverage solidified product that is portable and that can be mixed with water or hot water to easily prepare a better-tasting sugar-free grain tea beverage.

A fourth object of the present invention is to provide a novel coffee beverage solidified product that is portable and that can be mixed with water or hot water to easily prepare a better-tasting sugar-free coffee beverage.

As a result of extensive research on how to easily prepare a beverage that, for example, is to be used in a reusable bottle for personal use, the inventors perfected the present invention upon discovering that a novel solidified beverage product that is portable and that can be mixed with water or hot water to easily prepare a sugar-free beverage can be provided by freeze-drying a beverage in which the saccharide concentration has been reduced and dextrin is included.

The present invention can provide the following beverage solidified products.

[First Invention]

1. A freeze-dried beverage solidified product that is mixed with water or hot water to prepare a beverage,

> said beverage solidified product comprising dextrin, wherein
> the saccharide content of the beverage solidified product is 8.5% by mass or less.

2. The beverage solidified product according to 1, wherein the beverage solidified product is formulated into individual single-serving units per a given amount of water or hot water.

3. The beverage solidified product according to 1 or 2, wherein the dextrin content of the beverage solidified product is 0.5 to 40% by mass.

4. The beverage solidified product according to any of 1 through 3, wherein the dextrin has a dextrose equivalent value of 2 to 30.

5. The beverage solidified product according to any of 1 through 4, wherein the density of the beverage solidified product is greater than 0.13 g/cm$^3$ and less than 0.40 g/cm$^3$.

6. The beverage solidified product according to any of 1 through 5, wherein the volume of the beverage solidified product is 4 to 50 cm$^3$.

7. The beverage solidified product according to any of 1 through 6, wherein the beverage solidified product is packaged in a moisture-resistant packaging material.

8. The beverage solidified product according to any of 1 through 7, wherein the beverage is green tea, black tea, Oolong tea, grain tea, or coffee.

9. The beverage solidified product according to 8, wherein the grain tea is barley tea.

10. A beverage that is obtained by mixing the beverage solidified product according to any of 1 through 9 with water or hot water.

11. A process for producing a beverage solidified product, comprising

> preparing a beverage extract,
> mixing dextrin into the beverage extract, and
> freeze-drying the resulting mixture,
> provided that no saccharides are added throughout the entire process.

[Second Invention]

The present invention can provide the following green tea beverage solidified products.

1. A freeze-dried green tea beverage solidified product that is mixed with water or hot water to prepare a green tea beverage,

> said green tea beverage solidified product comprising dextrin and insoluble fine particles of tea raw material, wherein
> the saccharide content of the green tea beverage solidified product is 8.5% by mass or less.

2. The green tea beverage solidified product according to 1, wherein the insoluble fine particles of tea raw material are finely ground tea leaves and/or stems.

3. The green tea beverage solidified product according to 1 or 2, wherein the content of the insoluble fine particles of tea raw material in the green tea beverage solidified product is more than 0% by mass and not more than 30% by mass.

4. The green tea beverage solidified product according to any of 1 through 3, wherein the particle diameter of 90% of the total volume of the insoluble fine particles of tea raw material is 200 um or less.

5. The green tea beverage solidified product according to any of 1 through 4, wherein the green tea beverage solidified product is formulated into individual single-serving units per a given amount of water or hot water.

6. The green tea beverage solidified product according to any of 1 through 5, wherein the dextrin content of the green tea beverage solidified product is 0.5 to 40% by mass.

7. The green tea beverage solidified product according to any of 1 through 6, wherein the dextrin has a dextrose equivalent value of 2 to 30.

8. The green tea beverage solidified product according to any of 1 through 7, wherein the density of the green tea beverage solidified product is greater than 0.13 g/cm$^3$ and less than 0.40 g/cm$^3$.

9. The green tea beverage solidified product according to any of 1 through 8, wherein the volume of the green tea beverage solidified product is 4 to 50 cm$^3$.

10. The green tea beverage solidified product according to any of 1 through 9, wherein the green tea beverage solidified product is packaged in a moisture-resistant packaging material.

11. A green tea beverage that is obtained by mixing the green tea beverage solidified product according to any of 1 through 10 with water or hot water.

12. A process for producing a green tea beverage solidified product, comprising:

preparing a green tea beverage extract;
mixing dextrin and insoluble fine particles of tea raw material into the green tea beverage extract, and freeze-drying the resulting mixture,
provided that no saccharides are added throughout the entire process.

13. The process for producing a green tea beverage solidified product according to 12, wherein the insoluble fine particles of tea raw material are finely ground tea leaves and/or stems.

[Third Invention]

The present invention can provide the following grain tea beverage solidified products.

1 . A freeze-dried grain tea beverage solidified product that is mixed with water or hot water to prepare a grain tea beverage,

said grain tea beverage solidified product comprising dextrin and insoluble fine particles of grain tea raw material, wherein
the saccharide content of the grain tea beverage solidified product is 6.0% by mass or less.

2 . The grain tea beverage solidified product according to 1, wherein the insoluble fine particles of grain tea raw material are the finely ground product of at least one of barley, adlay, buckwheat, black beans, corn, and brown rice.

3 . The grain tea beverage solidified product according to 1 or 2, wherein the content of the insoluble fine particles of grain tea raw material in the grain tea beverage solidified product is more than 0% by mass and not more than 10% by mass.

4. The grain tea beverage solidified product according to any of 1 through 3, wherein the density of the grain tea beverage solidified product is 0.20 to 0.40 $g/cm^3$.

5. The grain tea beverage solidified product according to any of 1 through 4, wherein the grain tea beverage solidified product is formulated into individual single-serving units per a given amount of water or hot water.

6. The grain tea beverage solidified product according to any of 1 through 5, wherein the volume of the grain tea beverage solidified product is 4 to 50 $cm^3$.

7. The grain tea beverage solidified product according to any of 1 through 6, wherein the grain tea beverage solidified product is packaged in a moisture-resistant packaging material.

8 . The grain tea beverage solidified product according to any of 1 through 7, wherein the grain tea beverage is barley tea.

9. A grain tea beverage that is obtained by mixing the grain tea beverage solidified product according to any of 1 through 8 with water or hot water.

10 . A process for producing a grain tea beverage solidified product, comprising

preparing a grain tea beverage extract,
mixing dextrin and insoluble fine particles of the grain tea raw material into the grain tea beverage extract, and freeze-drying the resulting mixture,
provided that no saccharides are added throughout the entire process.

11 . The process for producing a grain tea beverage solidified product according to 10, wherein the insoluble fine particles of grain tea raw material are the finely ground product of at least one of barley, adlay, buckwheat, black beans, corn, and brown rice.

[Fourth Invention]

The present invention can provide the following coffee beverage solidified products.

1 . A freeze-dried coffee beverage solidified product that is mixed with water or hot water to prepare a coffee beverage,

said coffee beverage solidified product comprising dextrin and finely ground coffee beans, wherein the saccharide content of the coffee beverage solidified product is 5.0% by mass or less.

2 . The coffee beverage solidified product according to 1, wherein the content of the finely ground coffee beans in the coffee beverage solidified product is 0.3% by mass or more.

3 . The coffee beverage solidified product according 1 or 2, wherein the dextrin content in the coffee beverage solidified product is 11 to 50% by mass.

4 . The coffee beverage solidified product according to any of 1 through 3, wherein the coffee beverage solidified product is formulated into individual single-serving units per a given amount of water or coffee hot water.

5. The coffee beverage solidified product according to any of 1 through 4, wherein the dextrin has a dextrose equivalent value of 2 to 30.

6. The coffee beverage solidified product according to any of 1 through 5, wherein the density of the coffee beverage solidified product is 0.17 to 0.50 g/cm3.

7. The coffee beverage solidified product according to any of 1 through 6, wherein the volume of the coffee beverage solidified product is 4 to 50 cm$^3$.

8. The coffee beverage solidified product according to any of 1 through 7, wherein the coffee beverage solidified product is packaged in a moisture-resistant packaging material.

9. A coffee beverage that is obtained by mixing the coffee beverage solidified product according to any of 1 through 8 with water or hot water.

10.A process for producing a coffee beverage solidified product, comprising

preparing a coffee beverage extract,
mixing dextrin and finely ground coffee beans into the coffee beverage extract, and
freeze-drying the resulting mixture,
provided that no saccharides are added throughout the entire process.

The present invention makes it possible to provide a novel beverage solidified product that is portable and that can be mixed with water or hot water to easily prepare a sugar-free beverage.

The present invention also makes it possible to provide a novel green tea beverage solidified product that is portable and that can be mixed with water or hot water to easily prepare a better-tasting sugar-free green tea beverage.

The present invention also makes it possible to provide a novel grain tea beverage solidified product that is portable and that can be mixed with water or hot water to easily prepare a better-tasting sugar-free grain tea beverage.

The present invention also makes it possible to provide a novel coffee beverage solidified product that is portable and that can be mixed with water or hot water to easily prepare a better-tasting sugar-free coffee beverage.

## BRIEF DESCRIPTION OF THE DRAWINGS

[Figure 1] A photograph showing the appearance of the green tea solidified products prepared in Production Example 1-1 relating to the first invention.
[Figure 2] A photograph showing the appearance of the green tea solidified products prepared in Production Example 3 relating to the second invention.
[Figure 3] A photograph showing the appearance of the barley tea solidified products prepared in Production Example 3 relating to the third invention.
[Figure 4] A photograph showing the appearance of the coffee solidified products prepared in Production Example 2 relating to the fourth invention.

## MODES FOR CARRYING OUT THE INVENTION

Specific embodiments of the beverage solidified products, processes for producing the beverage solidified products, and beverages prepared from the beverage solidified products are illustrated below.

In the present Description, preferred embodiments of one feature can be combined with any preferred embodiments of one or more other features.

Numerical ranges expressed as "X to Y" mean numerical ranges from X to Y, inclusive, and any lower limit and upper limit can be combined to form a numerical range for any parameter.

[First Invention]

The first invention of the present invention is described below.

[Beverage Solidified Product]

The beverage solidified product of the present invention is a freeze-dried beverage solidified product that is mixed with water or hot water to prepare a beverage, characterized in that said beverage solidified product comprises dextrin, and the saccharide content of the beverage solidified product is 8.5% by mass or less.

This makes it possible to provide a novel beverage solidified product that is portable and that can be mixed with water or hot water to easily prepare a sugar-free beverage.

As used in the present invention, "beverage" means green tea, black tea, Oolong tea, grain tea (such as barley tea), or coffee. The beverage solidified products of the present invention can be produced by adding dextrin to, and freeze-drying, these beverage liquids (extracts).

The beverage solidified products of the present invention have exceptional moldability, and can be molded without expanding or breaking apart upon being freeze-dried. The beverage solidified products of the present invention also have exceptional shape retention and moisture resistance, and are thus more suitable for storage. The beverage solidification products of the present invention also have better instant solubility, and can therefore be mixed and dispersed or dissolved in a given amount of water or hot water as needed to easily prepare sugar-free beverages. They are particularly suitable for preparing beverages in reusable bottles for personal use while on outings away from home.

The beverage solidified product of the present invention is characterized by comprising dextrin. The inclusion of dextrin allows the beverage solidified product that is obtained via freeze-drying to have better moldability and shape retention.

As used in the present invention, "dextrin" refers to a variety of decomposition products that are obtained over the course of the process by which starch is hydrolyzed into maltose. Commercially available dextrins can be used in the present invention.

The dextrin content (measured value) of the beverage solidified products of the present invention is preferably 0.5 to 40% by mass, more preferably 5 to 40% by mass, still more preferably 15 to 40% by mass, and even more preferably 20 to 35% by mass. The concentration of dextrin can be adjusted to within the preferred range to produce a beverage solidified product that is clearer or less sticky, thus allowing products with a more attractive appearance to be produced.

In order to determine the dextrin content of beverage solidified products of the present invention, the beverage solidified product is dissolved in water to prepare a beverage, which is used as a measuring sample. In the present invention, the dextrin content is determined by hydrolyzing the dextrin in the sample via enzymatic treatment, and then determining the amount of degraded glucose, which is converted to the dextrin equivalent value. Specifically, the dextrin content can be determined by the method described in the examples. As dextrin can also be hydrolyzed without enzymatic treatment, the amount of dextrin blended into the beverage solidified product will not always be consistent with the dextrin content determined by the method employed in the present invention (measured value), but a person of ordinary skill in the art will readily appreciate that the beverage solidified product of the present invention is also characterized by the dextrin content (measured value). As used in the present Description, the dextrin content refers to the measured value, not the amount that is blended, unless otherwise specified.

In the present invention, the dextrose equivalent value (commonly referred to as the "DE value") of dextrin is, for example, 2 to 30, preferably 6 to 21, and more preferably 10 to 18.

When the dextrose equivalent values in the above numerical ranges are low, this means the dextrin has a molecular weight, with no further decrease in molecular weight. The freezing point of food extracts that contain dextrins having a low dextrose equivalent value is thus less likely to drop, and when such extracts are freeze-dried, the resulting beverage solidified products are less likely to foam or expand. Specifically, the moldability and shape retention will not be compromised. Additionally, dextrins having low dextrose equivalent values are not sweet, and are therefore preferred for the preparation of sugar-free beverages. On the other hand, dextrins having a low dextrose equivalent value are poorly soluble, which is a drawback in terms of the instant solubility of the resulting beverage solidified product. The disadvantages of a low dextrose equivalent value can be avoided if the DE value is 6 or more, and preferably 10 or more. Even dextrins that have a low dextrose equivalent value can be used in combination with other dextrins that have a dextrose equivalent value within the preferred range to prepare beverage solidified products with better instant solubility.

The beverage solidified products of the present invention contain the soluble solids of beverages that are to be prepared by mixing the beverage solidified products with water or hot water. Finely ground beverage raw materials such as tea leaves or stems, grains (such as barley), and coffee beans may also be included as insoluble solids.

The soluble solids of beverages can be selected depending on the type of beverage that is going to be prepared, where soluble solids of green tea, black tea, Oolong tea, grain tea (such as barley tea), or coffee are examples that can be used.

Soluble solids can be obtained by obtaining an extract from beverage raw materials, such as tea leaves or stems, grains, and coffee beans, in the conventional manner, and concentrating the extract, as needed. Commercially available extracts (liquids or concentrated liquids) or extracts that have been dried by spray drying, for example, can also be used as soluble solids.

In the beverage solidified products of the present invention, the content of soluble solids derived from the beverage extract is, for example, 20% by mass or more, preferably 25 to 90% by mass, and more preferably 30 to 50% by mass. The amount of water or hot water that is used when preparing a beverage from the beverage solidified product of the present invention is preferably 30 to 300 times the mass of the beverage solidified product.

The beverage solidified product of the present invention is characterized in that the concentration of saccharides in the beverage solidified product is 8.5% by mass or less. This will allow a moisture-resistant beverage solidified product to be prepared. Preparing a beverage by mixing the resulting beverage solidified product with water or hot water will make it possible to produce a sugar-free beverage that has a natural flavor, without being sweet.

As used in the present invention, the term "saccharides" refers to monosaccharides, disaccharides, and sugar alcohols. As used in the present invention, the term "saccharides" does not include polysaccharides, especially dextrins.

The concentration of saccharides in the beverage solidified product of the present invention is 8.5% by mass or less, so that when the product is mixed with water or hot water in an amount 30 to 300 times the mass of the beverage solidified product, the concentration of saccharides in the resulting beverage will be less than 0.5% by mass per 100 g of beverage, making it possible to prepare what is referred to as a sugar-free beverage, as defined in the Food Labeling Standards.

To determine the saccharide content of the beverage solidified products of the present invention, a beverage solidified product is dissolved in water to prepare a beverage, which is used as a sample in high-performance liquid chromatography. Specifically, the saccharide content can be determined by the method described in the examples.

The concentration of saccharides in the beverage solidified products of the present invention is preferably 8.0% by mass or less, more preferably 7.5% by mass or less, and even more preferably 7.0% by mass or less.

Preferably no saccharides should be added to the beverage solidified products of the present invention, except for saccharides associated with the materials that are used to prepare beverages, during the production process.

In one embodiment, the beverage solidified product of the present invention should preferably contain no sorbitol, lactose, or maltose, in particular, while no sorbitol, lactose, or maltose should be added, except for those associated with the materials that are used to prepare beverages, during the production process.

The beverage solidified product of the present invention is preferably solidified into individual single-serving units rather than being a powder. A single serving means the amount in which a beverage of a desired concentration can be prepared per the volume of a container (such as a reusable bottle for personal use) of a given volume (such as 250 mL, 500 mL, or 1 L). The concentration of the beverage solidified product of the present invention can be designed for a given volume of a specific container.

The beverage solidified product of the present invention may be any shape, such as a rectangular shape, cubic shape, spherical shape, cylindrical shape, or any other shape. A shape can thus be created to enhance the palatability of the product for commercial purposes.

The beverage solidified product of the present invention may come in any volume, such as 4 to 50 cm3, preferably 4 to 20 cm3, and more preferably 4 to 10 $cm^3$. The beverage solidified product of the present invention is preferably of a volume and dimensions which will allow it to be placed in containers of specific volume and dimensions, and can be designed, as appropriate, depending on the volume of reusable bottles for personal use as well as the dimensions of the openings thereof.

The density of the beverage solidified product of the present invention is preferably greater than 0.13 $g/cm^3$ and less than 0.40 $g/cm^3$. This will allow the shape retention and moisture resistance of the beverage solidified product of the present invention to be improved. A density below this range will result in poor moisture resistance. A density above this range will result in poor durability.

In the beverage solidified product of the present invention, the lower limit of the density can be, for example, 0.14 $g/cm^3$ or more, 0.15 $g/cm^3$ or more, 0.16 $g/cm^3$ or more, 0.17 $g/cm^3$ or more, or 0.18 $g/cm^3$ or more, and the upper limit of the density can be, for example, 0.39 $g/cm^3$ or less, 0.38 $g/cm^3$ or less, 0.37 $g/cm^3$ or less, 0.36 $g/cm^3$ or less, 0.35 $g/cm^3$ or less, 0.34 g $/cm^3$ or less, or 0.33$g/cm^3$ or less.

The beverage solidified product of the present invention is preferably packaged in consideration of storage and transportation. The packaging material is preferably moisture-resistant. Beverage solidified products may be packaged as stand-alone individually packaged single servings, or as packages containing a plurality of individual packaged single servings (such as blister packs).

[Process for Producing Beverage Solidified Product]

The beverage solidified product of the present invention can be produced by freeze-drying a liquid mixture of the materials constituting the beverage solidified product.

Specifically, a mixture is prepared by mixing a beverage extract, dextrin, and any additives, and the mixture is poured into suitable containers or molds, and is frozen by being allowed to stand overnight at -20 to -40°C under atmospheric pressure. The frozen mixture is then dried by allowing the containers or molds to stand overnight at 30 to 70°C under a pressure of 130 Pa or less so as to keep the frozen mixture from thawing.

However, no saccharides are added in the process for producing the beverage solidified product of the present invention.

The beverage extracts, dextrins, and optional additives have each been described with regard to the beverage solidified product serving as an embodiment of the present invention. These materials can be mixed by selecting suitable conditions and using any well-known art in this technical field, provided that a homogeneous mixture is obtained.

Any material can be used for the container or mold, provided that the freeze-dried beverage solidified product can be removed without sticking. Metal or plastic can be used, for example.

[Beverages]

Beverages of the present invention are obtained by mixing the above-described beverage solidified products of the present in water or hot water. The beverages of the invention can be green tea, black tea, Oolong tea, grain tea (such as barley tea), or coffee.

The amount of water or hot water that is used to prepare a beverage by dissolving the beverage solidified product can be adjusted, as appropriate, depending on consumer preference and the strength of the beverage that is going to be prepared.

[Second Invention]

The second invention of the present invention is described below. Outside of the features specifically described below, all features explained for the first invention are applicable to the second invention as well, where relevant.

[Green Tea Beverage Solidified Product]

The green tea beverage solidified product (also referred to below as the beverage solidified product) of the present invention is a freeze-dried green tea beverage solidified product that is mixed with water or hot water to prepare a green tea beverage, characterized in that said green tea beverage solidified product comprises dextrin and insoluble fine particles of tea raw material, and the saccharide content of the green tea beverage solidified product is 8.5% by mass or less.

This makes it possible to provide a novel green tea beverage solidified product that is portable and that can be mixed with water or hot water to easily prepare a better-tasting sugar-free green tea beverage.

The green tea beverage solidified product of the present invention can be produced by freeze-drying a green tea extract that contains dextrin and insoluble particles of tea raw material.

The beverage solidified products of the present invention have exceptional moldability, and can be molded without expanding or breaking apart upon being freeze-dried. The beverage solidified products of the present invention also have exceptional shape retention and moisture resistance, and are thus more suitable for storage. The beverage solidification products of the present invention also have better instant solubility, and can therefore be mixed and dispersed or dissolved in a given amount of water or hot water as needed to easily prepare sugar-free green tea beverages. They are particularly suitable for preparing green tea beverages in reusable bottles for personal use while on outings away from home.

In order to determine the dextrin content of beverage solidified products of the present invention, the beverage solidified product is dissolved in water to prepare a beverage, the insoluble fine particles of tea raw material are removed by means such as filtration, and the filtered beverage is used as a measuring sample.

Green tea beverage solidified products of the present invention contain the soluble solids of green tea beverages that are to be prepared by mixing the beverage solidified product with water or hot water.

Soluble solids can be obtained by obtaining an extract from green tea beverage raw materials, such as tea leaves or stems, in the conventional manner, and concentrating the extract, as needed. Commercially available extracts (liquids or concentrated liquids) or extracts that have been dried by spray drying, for example, can also be used as soluble solids.

The beverage solidified product of the present invention is characterized by comprising insoluble fine particles of tea raw material.

This will allow green tea beverages that have been prepared by mixing the beverage solidified product with water or hot water to be better tasting.

The insoluble fine particles of tea raw material are, specifically, finely ground tea leaves and/or stems. A finely ground product can be prepared by grinding tea leaves and stems by known means.

The content of insoluble fine particles of tea raw material in the beverage solidified product is preferably more than 0% by mass and not more than 30% by mass, and more preferably 0.05% by mass to 30% by mass.

The particle diameter of 90% of the total volume ($D_{90}$) of the insoluble fine particles of the tea raw material is preferably 200 um or less. Ensuring that the $D_{90}$ of the insoluble fine particles is within this range will ensure that the green tea beverage is smooth and has a good taste when drunk. Insoluble fine particles having a $D_{90}$ larger than this will result in a beverage that feels coarse when drunk.

The particle diameter of 90% of the total volume ($D_{90}$) is the particle diameter of 90% of the total when the particle size distribution is determined on the basis of volume via laser diffraction scattering. Specifically, the particle diameter of 90% of the total volume of the insoluble fine particles ($D_{90}$) is determined by analyzing a sample, obtained by uniformly dispersing 0.005 g of insoluble fine particles in 20 g of water, under the following conditions.

Analyzer: MT31200II Series (by MicrotracBEL Corp.)
Scattering medium: Pure water
Solvent refractive index: 1.333
Particle shape: Non-spherical
Particle refractive index: 1.81

[Process for Producing Green Tea Beverage Solidified Product]

The green tea beverage solidified product of the present invention can be produced by freeze-drying a liquid mixture of the materials constituting the beverage solidified product.

Specifically, a mixture is prepared by mixing a green tea beverage extract, dextrin, insoluble fine particles of tea raw material, and any additives, and the mixture is poured into suitable containers or molds, and is frozen by being allowed to stand overnight at -20 to -40°C under atmospheric pressure. The frozen mixture is then dried by allowing the containers or molds to stand overnight at 30 to 70°C under a pressure of 130 Pa or less so as to keep the frozen mixture from melting.

However, no saccharides are added throughout the entire process for producing the beverage solidified product of the present invention.

The beverage extracts, dextrins, insoluble fine particles of tea raw material, and optional additives have each been described with regard to the beverage solidified product serving as an embodiment of the present invention. These materials can be mixed by selecting suitable conditions and using any well-known art in this technical field, provided that a homogeneous mixture is obtained.

[Third Invention]

The third invention of the present invention is described below. Outside of the features specifically described below, all features explained for the first invention are applicable to the third invention as well, where relevant.

[Grain Tea Beverage Solidified Product]

The grain tea beverage solidified product (also referred to below as the beverage solidified product) of the present invention is a freeze-dried grain tea solidified product that is mixed with water or hot water to prepare a grain tea beverage, characterized in that said grain tea beverage solidified product comprises dextrin and insoluble fine particles of grain tea raw material, and the saccharide content of the grain tea beverage solidified product is 6.0% by mass or less.

This makes it possible to provide a novel grain tea beverage solidified product that is portable and that can be mixed with water or hot water to easily prepare a better-tasting sugar-free grain tea beverage.

The grain tea beverage solidified product of the present invention can be produced by freeze-drying a grain tea extract that contains dextrin and insoluble particles of grain tea raw material.

The beverage solidified products of the present invention have exceptional moldability, and can be molded without expanding or breaking apart upon being freeze-dried. The beverage solidified products of the present invention also have exceptional shape retention and moisture resistance, and are thus more suitable for storage. The beverage solidification products of the present invention also have better instant solubility, and can therefore be mixed and dispersed or dissolved in a given amount of water or hot water as needed to easily prepare sugar-free grain tea beverages. They are particularly suitable for preparing grain tea beverages in reusable bottles for personal use while on outings away from home.

In order to determine the dextrin content of beverage solidified products of the present invention, the beverage solidified product is dissolved in water to prepare a beverage, the insoluble particles of grain tea raw material are removed by means such as filtration, and the filtered beverage is used as a measuring sample.

Grain tea beverage solidified products of the present invention contain the soluble solids of grain tea beverages that are to be prepared by mixing the beverage solidified product with water or hot water.

The soluble solids of grain tea beverages can be selected depending on the type of grain tea beverage that is going to be prepared, where the soluble solids of barley tea, adlay tea, buckwheat tea, black bean tea, corn tea, or brown rice tea are examples that can be used. A single type of soluble solids may be used alone, or combinations of two or more types may be used.

Soluble solids can be obtained by obtaining an extract from grain tea beverage raw materials, such as grain seeds, in the conventional manner, and concentrating the extract, as needed. Commercially available extracts (liquids or concentrated liquids) or extracts that have been dried by spray drying, for example, can also be used as soluble solids.

The beverage solidified product of the present invention is characterized by comprising insoluble fine particles of grain tea raw material.

This will allow grain tea beverages that have been prepared by mixing the beverage solidified product with water or hot water to be better tasting.

The insoluble fine particles of grain tea raw material are, specifically, the finely ground product of at least one of barley, adlay, buckwheat, black beans, corn, and brown rice. A single type of finely ground product may be used alone, or combinations of two or more types may be used. A finely ground product can be prepared by grinding these grain tea raw materials by known means.

The content of insoluble fine particles of grain tea raw material in the beverage solidified product is preferably more than 0% by mass and not more than 10% by mass, more preferably 0.1% by mass to 6.0% by mass, and even more preferably 0.4% by mass to 3.0% by mass.

The particle size of the insoluble fine particles of the grain tea raw material can be selected, as appropriate, based on the particle diameter of 90% of the total volume ($D_{90}$), as determined by laser diffraction scattering, for example. Ensuring that the $D_{90}$ is within the preferred range will ensure that the grain tea beverage prepared from the grain tea beverage solidified product is smooth and has a good taste when drunk, whereas a $D_{90}$ that is too great will result in a beverage that feels coarse when drunk.

The beverage solidified product of the present invention is characterized in that the concentration of saccharides in the beverage solidified product is 6.0% by mass or less. This will allow a moisture-resistant beverage solidified product to be prepared. Preparing a grain tea beverage by mixing the resulting beverage solidified product with water or hot water will make it possible to produce a sugar-free grain tea beverage that has a natural flavor, without being sweet.

As used in the present invention, the term "saccharides" refers to monosaccharides, disaccharides, and sugar alcohols. As used in the present invention, the term "saccharides" does not include polysaccharides, especially dextrins.

The concentration of saccharides in the beverage solidified product of the present invention is 6.0% by mass or less, so that when the product is mixed with water or hot water in an amount 30 to 300 times the mass of the beverage solidified product, the concentration of saccharides in the resulting grain tea beverage will be less than 0.5% by mass per 100 g of beverage, making it possible to prepare what is referred to as a sugar-free grain tea beverage, as defined in the Food Labeling Standards.

The density of the beverage solidified product of the present invention is preferably 0.20 to 0.40 g/cm³. This will allow the shape retention of the beverage solidified product of the present invention to be improved, and will ensure that the flavor of the grain tea beverage prepared from the grain tea beverage solidified product is of a more agreeable intensity. A density below this range will result in a grain tea beverage with a flavor or less agreeable intensity. A density above this range will result in poor shape retention.

In the beverage solidified product of the present invention, the lower limit of the density can be, for example, 0.21 g/cm³ or more, 0.22 g/cm³ or more, or 0.23 g/cm³ or more, and the upper limit of the density can be, for example, 0.39 g/cm³ or less, 0.38 g/cm³ or less, or 0.37 g/cm³ or less.

[Process for Producing Grain Tea Beverage Solidified Product]

The grain tea beverage solidified product of the present invention can be produced by freeze-drying a liquid mixture of the materials constituting the beverage solidified product.

Specifically, a mixture is prepared by mixing a grain tea beverage extract, dextrin, insoluble fine particles of grain tea raw material, and any additives, and the mixture is poured into suitable containers or molds, and is frozen by being allowed to stand overnight at -20 to -40°C under atmospheric pressure. The frozen mixture is then dried by allowing the containers or molds to stand overnight at 30 to 70°C under a pressure of 130 Pa or less so as to keep the frozen mixture from thawing.

However, no saccharides are added in the process for producing the beverage solidified product of the present invention.

The beverage extracts, dextrins, insoluble fine particles of grain tea raw material, and optional additives have each been described with regard to the beverage solidified product serving as an embodiment of the present invention. These materials can be mixed by selecting suitable conditions and using any well-known art in this technical field, provided that a homogeneous mixture is obtained.

[Fourth Invention]

The fourth invention of the present invention is described below. Outside of the features specifically described below, all features explained for the first invention are applicable to the fourth invention as well, where relevant.

[Coffee Beverage Solidified Product]

The coffee beverage solidified product (also referred to below as the beverage solidified product) of the present invention is a freeze-dried coffee solidified product that is mixed with water or hot water to prepare a coffee beverage, characterized in that said coffee beverage solidified product comprises dextrin and ground coffee beans material, and the saccharide content of the coffee beverage solidified product is 5.0% by mass or less.

This makes it possible to provide a novel coffee beverage solidified product that is portable and that can be mixed with water or hot water to easily prepare a better-tasting sugar-free coffee beverage.

The coffee beverage solidified product of the present invention can be produced by freeze-drying a coffee extract that contains dextrin and insoluble particles of coffee raw material.

The beverage solidified products of the present invention have exceptional moldability, and can be molded without expanding or breaking apart upon being freeze-dried. The beverage solidified products of the present invention also have exceptional shape retention and moisture resistance, and are thus more suitable for storage. The beverage solidification products of the present invention also have better instant solubility, and can therefore be mixed and dispersed or dissolved in a given amount of water or hot water as needed to easily prepare sugar-free coffee beverages. They are particularly suitable for preparing coffee beverages in reusable bottles for personal use while on outings away from home.

In order to determine the dextrin content of beverage solidified products of the present invention, the beverage solidified product is dissolved in water to prepare a beverage, the finely ground coffee beans are removed by means such as filtration, and the filtered beverage is used as a measuring sample.

The coffee beverage solidified products of the present invention contain the soluble solids of coffee beverages that are to be prepared by mixing the beverage solidified products with water or hot water.

Soluble solids can be obtained by obtaining an extract from coffee beverage raw materials, such as coffee beans, in the conventional manner, and concentrating the extract, as needed. Commercially available extracts (liquids or concentrated liquids) or extracts that have been dried by spray drying, for example, can also be used as soluble solids.

The beverage solidified product of the present invention is characterized by comprising finely ground coffee beans.

This will allow coffee beverages that have been prepared by mixing the beverage solidified product with water or hot water to be better tasting.

Finely ground coffee beans can be prepared by grinding the coffee beans by known means.

The content of finely ground coffee beans in the coffee beverage solidified product is preferably 0.3% by mass or more, more preferably 0.3 to 30% by mass, even more preferably 1.5% by mass to 28% by mass, and still more preferably 1.5 to 20% by mass.

The particle size of the finely ground coffee beans can be selected, as appropriate, based on the particle diameter of 90% of the total volume ($D_{90}$), as determined by laser diffraction scattering, for example. Ensuring that the $D_{90}$ is within the preferred range will ensure that the coffee beverage prepared from the coffee beverage solidified product is smooth and has a good taste when drunk, whereas a $D_{90}$ that is too great will result in a beverage that feels coarse when drunk.

The beverage solidified product of the present invention is characterized in that the concentration of saccharides in the beverage solidified product is 5.0% by mass or less. This will allow a moisture-resistant beverage solidified product to be prepared. Preparing a coffee beverage by mixing the resulting beverage solidified product with water or hot water will make it possible to produce a sugar-free coffee beverage that has a natural flavor, without being sweet.

As used in the present invention, the term "saccharides" refers to monosaccharides, disaccharides, and sugar alcohols. As used in the present invention, the term "saccharides" does not include polysaccharides, especially dextrins.

The concentration of saccharides in the beverage solidified product of the present invention is 5.0% by mass or less, so that when the product is mixed with water or hot water in an amount 30 to 300 times the mass of the beverage solidified product, the concentration of saccharides in the resulting coffee beverage will be less than 0.5% by mass per 100 g of beverage, making it possible to prepare what is referred to as a sugar-free coffee beverage, as defined in the Food Labeling Standards.

To determine the saccharide content of the beverage solidified products of the present invention, a beverage solidified product is dissolved in water to prepare a coffee beverage, the finely ground coffee beans are removed by means such as filtration, and the filtered beverage is then used as a sample in high-performance liquid chromatography. Specifically, the saccharide content can be determined by the method described in the examples.

The concentration of saccharides in the beverage solidified products of the present invention is preferably 4.0% by mass or less, and more preferably 3.2% by mass or less.

The density of the beverage solidified product of the present invention is preferably 0.17 to 0.40 g/cm$^3$. This will allow the moisture resistance of the beverage solidified product of the present invention to be improved, and will ensure that the flavor of the coffee beverage prepared from the coffee beverage solidified product is of a more agreeable intensity. A density below this range will result in poor moisture resistance. A density above this range will result in poor moldability or instant solubility.

In the beverage solidified product of the present invention, the lower limit of the density can be, for example, 0.17 g/cm$^3$ or more, or 0.18 g/cm$^3$ or more, and the upper limit of the density can be, for example, 0.40 g/cm$^3$ or less, 0.35 g/cm$^3$ or less or 0.30 g/cm$^3$ or less.

[Process for Producing Coffee Beverage Solidified Product]

The coffee beverage solidified product of the present invention can be produced by freeze-drying a liquid mixture of the materials constituting the beverage solidified product.

Specifically, a mixture is prepared by mixing a coffee beverage extract, dextrin, finely ground coffee beans, and any additives, and the mixture is poured into suitable containers or molds, and is frozen by being allowed to stand overnight at -20 to -40°C under atmospheric pressure. The frozen mixture is then dried by allowing the containers or molds to stand overnight at 30 to 70°C under a pressure of 130 Pa or less so as to keep the frozen mixture from thawing.

However, no saccharides are added in the process for producing the beverage solidified product of the present invention.

The beverage extracts, dextrins, finely ground coffee beans, and optional additives have each been described with regard to the beverage solidified product serving as an embodiment of the present invention. These materials can be mixed by selecting suitable conditions and using any well-known art in this technical field, provided that a homogeneous mixture is obtained.

**EXAMPLES**

The present invention is illustrated in further detail by the following examples, but the scope of the present invention is not limited in any way to the descriptions of these examples.

[First Invention]

Production Example 1-1: Preparation of Green Tea Solidified Product

A green tea extract having a soluble solids concentration (Brix) of 20% was prepared by extracting soluble solids from commercially available green tea leaves using hot water and concentrating the solids. The green tea extract and dextrin (Sandek #150; dextrose equivalent value: 15-18; by Sanwa Starch Co., Ltd.,) were then mixed per the formulations shown in Table 2 to prepare green tea beverages.

The resulting green tea beverages were poured into resin molds having a volume of 5.54 cm3, and were frozen by being allowed to stand overnight at -35°C. To prevent the frozen green tea beverages from melting, the molds were then placed in a sealable chamber, and the chamber was sealed. The beverages were dried by being allowed to stand overnight at a chamber pressure of 10 Pa or less and a temperature of 25°C, giving green tea solidified products.

The mass [g] per block of the resulting green tea solidified products was determined (average of 10 blocks), the dextrin content and monosaccharide content were then determined by the following procedures, and the moldability, shape retention, moisture resistance, and instant solubility were assessed. The results are shown in Table 2.

(Dextrin Content)

The dextrin content was determined by hydrolyzing the dextrin in the samples via enzymatic treatment, and by then determining the amount of degraded glucose, which was converted to the dextrin value. The specific procedure is described in detail below.

0.5 g of beverage solidified product was dissolved in 50 mL of ion-exchange water, and the dissolved product was filtered using filter paper (No. 5B, by Toyo Roshi Co., Ltd.). To 5 mL of the filtrate were added 90 mL of 99.5% ethanol and 2 to 3 drops of saturated saline solution, and the mixture was allowed to stand overnight in a refrigerator.

The supernatant was filtered off using fiberglass filter paper (GS-25, by Toyo Roshi Co., Ltd.), 40 mL of 90% ethanol was stirred in, and the mixture was centrifuged at 2000 rpm for 10 minutes. The supernatant was filtered off using fiberglass filter paper (GS-25, Toyo Roshi Co., Ltd.), and portions of the filtrate were used as samples to check on the low-molecular weight sugar reaction by the phenol-sulfuric acid method. These operations were repeated until there were no longer any low-molecular weight sugar reactions, and the low-molecular weight sugars were extracted off from the samples.

The residue on the fiberglass filter paper was recovered in 30 mL of ion-exchange water, 10 mL of glucoamylase solution (1.5 g of AMYLOGLUCOSIDASE (Megazyme, E-AMGDD) that had been brought to a volume of 100 mL using 0.2 mol/L acetate buffer (pH 4.8)) was added, an enzymatic reaction was brought about for 2 hours at 37°C, the reaction solution was filtered using filter paper (No. 5B, by Toyo Roshi Co., Ltd.), and the filtrate was used as sample to quantify glucose using a glucose quantification kit (Glucose CII-Test Wako, by FUJIFILM Wako Pure Chemical Corporation; glucose standard solution concentration: 0 to 80 ug/mL). The dextrin content (measured value) was determined by the following equation based on the measured glucose content.

$$\texttt{Dextrin content (measured value)=glucose content×0.9}$$

The hydrolysis of dextrin is expressed as "dextrin+n water=n glucose," where the number of water molecules n needed to hydrolyze the dextrin is equal to the number of glucose molecules that are produced, allowing the weight of dextrin to be theoretically determined by subtracting the weight of water from the weight of the glucose that is produced. As the molecular weight of water and glucose are 18 and 180, respectively, the weight of dextrin can be determined by multiplying the weight of glucose by 0.9.

[Saccharide Content]

The concentration of saccharides (monosaccharides, disaccharides, and sugar alcohols) in the green tea solidified products was determined by high performance liquid chromatography. The specific procedure is described in detail below.

1 g of the beverage solidified product was dissolved in water (20 to 50 mL), the solution was filtered (membrane filter), and the concentration was then determined by high-performance chromatography per Analysis Method 1.

Analysis Method 1

Device: Chromaster (Hitachi High-Tech Corporation)
Detector: Photodetector 5440 (Hitachi High-Tech Corporation)
Column: Shodex Asahipack NH2P-50 4E, $\varphi$4.6 mm×250 mm (Showa Denko KK)
Column temperature: 40°C
Mobile phase: Solution A: Acetonitrile; Solution B: Water; Solution C: 10% phosphoric acid

Gradient:

[Table 1]

|  | 0 minutes | 30 minutes | 41 minutes | 41.1 minutes | 50 minutes | 50.1 minutes | 60 minutes |
|---|---|---|---|---|---|---|---|
| Solution A | 90% | 75% | 75% | 60% | 60% | 90% | 90% |
| Solution B | 5% | 20% | 20% | 35% | 35% | 5% | 5% |
| Solution C | 5% | 5% | 5% | 5% | 5% | 5% | 5% |

Flow rate: 1 mL/min
Injection volume: 10 $\mu$L
Fluorescence excitation wavelength: 330 nm
Fluorescence measurement wavelength: 470 nm
Post-column: Reaction solution: mixture of phosphoric acid, acetic acid and phenylhydrazine (220:180:6)

Reaction solution flow rate: 0.4 mL/min
Reaction temperature: 150°C

Samples were screened to see if they contained 0.1% or more of monosaccharides (fructose, glucose, mannose, arabinose, galactose, xylose, rhamnose, ribose, fucose), disaccharides (sucrose, maltose, lactose), or sugar alcohols (erythritol, xylitol, sorbitol, mannitol, maltitol, Palatinite, maltotriitol, maltotetraitol), and components containing 0.1% or more were quantitatively analyzed. The detection sensitivity of saccharides differs depending on the type of beverage solidified product, and the amount of water for dissolving the beverage solidified products may therefore be adjusted to ensure better measurement accuracy. The filtrate may, or may not, be diluted depending on the saccharide concentration. Instead of the method described above (Analysis Method 1), saccharides may also be analyzed under conditions of analysis such as the following, provided that the detection sensitivity is adequate.

Analysis Method 2

Device: LC-20AD (Shimadzu Corporation)
Detector: Differential refractometer RID-20A (Shimadzu Corporation)
Column: Intersil NH$_2$, $\varphi$3.0 mm$\times$150 mm (GL Sciences, Inc.)
Column temperature: 25°C
Mobile phase: Acetonitrile:water (80:20)
Flow rate: 0.7 mL/min
Injection volume: 5 $\mu$L

Analysis Method 3

Device: LC-20AD (Shimadzu Corporation)
Detector: Fluorescence Detector RF-20A$_{XS}$ (Shimadzu Corporation)
Column: Wakosil 5NH$_2$, $\varphi$4.6 mm$\times$250 mm (GL Sciences, Inc.) Column temperature: 25°C
Mobile phase: Acetonitrile:water (75:25)
Flow rate: 1 mL/min
Injection volume: 2 $\mu$L
Fluorescence excitation wavelength: 320 nm
Fluorescence measurement wavelength: 430 nm
Post-column: Reaction solution: 3% boric acid solution containing 1% L-arginine

Reaction flow rate: 0.7 mL/min
Reaction temperature: 150°C

(Moldability)

The moldability of the solidified blocks was assessed based on the following criteria using 10 randomly selected blocks. The 10 blocks were rated the same.

∘: Visual assessment of the shapes confirmed that the blocks retained a rectangular shape without expanding or breaking apart.
×: Visual assessment of the shapes confirmed that the blocks expanded or broke apart, and failed to retain a rectangular shape.

(Shape Retention)

Five solidified blocks were allowed to naturally drop from a height of 65 cm five times. The five dropped blocks were collected in descending order of volume. The weight of the five dropped blocks was assessed based on the following criteria by calculating the weight ratio relative to the weight of the five blocks before they were dropped.

◎: Weight ratio of 90% or more.
○: Weight ratio of 60% to less than 90%.
×: Weight ratio less than 60%.

(Moisture Resistance)

The solidified blocks were allowed to stand for 24 hours at a temperature of 35°C and a humidity of 60%, the length of one side was measured, and the shrinkage rate based on the length of the one side prior to the test was assessed using the following criteria. The average of three randomly selected blocks was calculated.

◎: Shrinkage rate of less than 2%.
○: Shrinkage rate of 2% to less than 5%.
×: Shrinkage of 5% or more.

(Instant Solubility)

300 g of RO water was placed in a 300 mL beaker, and one solidified block was placed in the beaker while stirred at 500 rpm using a stirrer (PC-420D, by CORNING). The time it took the solidified block to dissolve in water until the solids were no longer visible was measured, and this dissolution time was assessed based on the following criteria. The average of two randomly selected blocks was calculated.

◎: Dissolution time of less than 30 seconds.
○: Dissolution time of 30 seconds to less than 180 seconds.
×: Dissolution time of 180 seconds or more.

In Table 2, "extracted solids [g/block]" refers to the soluble solids extracted from green tea leaves (beverage raw materials in other tables) per block. The "soluble solids content ratio [mass %]" is the "extracted solids"÷"block mass"×100. The "dextrin content ratio [mass%]" is the "measured dextrin content"÷"block mass"×100. The "saccharide content ratio [mass%]" is the "content of saccharides (monosaccharides+disaccharides+sugar alcohols)"÷"block mass"×100.

[Table 2]

|  | Test 1 | Test 2 | Test 3 | Test 4 | Test 5 |
|---|---|---|---|---|---|
| Block mass (g/block) | 0.86 | 0.97 | 1.00 | 1.00 | 1.01 |
| Density (g/cm$^3$) | 0.16 | 0.18 | 0.18 | 0.18 | 0.18 |
| Extract solids (g/block) | 0.86 | 0.49 | 0.33 | 0.29 | 0.25 |
| Soluble solids content ratio (mass%) | 100 | 50.0 | 33.3 | 28.6 | 25.0 |
| Dextrin added (g/block) | a | 0.48 | 0.67 | 0.71 | 0.76 |
| Measured dextrin content (g/block) | 0 | 0.21 | 0.29 | 0.31 | 0.33 |
| Dextrin added/extracted solids ratio | 0 | 1.0 | 2.0 | 2.5 | 3.0 |
| Dextrin content ratio (mass%) | 0 | 21.6 | 28.8 | 30.9 | 32.4 |
| Saccharide content (g/block) | 0.07 | 0.07 | 0.06 | 0.06 | 0.06 |
| Saccharide content ratio (mass%) | 8.6 | 6.7 | 6.1 | 5.9 | 5.8 |
| Moldability | ○ | ○ | ○ | ○ | ○ |
| Shape retention | ○ | ○ | ○ | ○ | ○ |
| Moisture resistance | × | ○ | ◎ | ◎ | ◎ |
| Instant solubility | ○ | ○ | ○ | ○ | ○ |

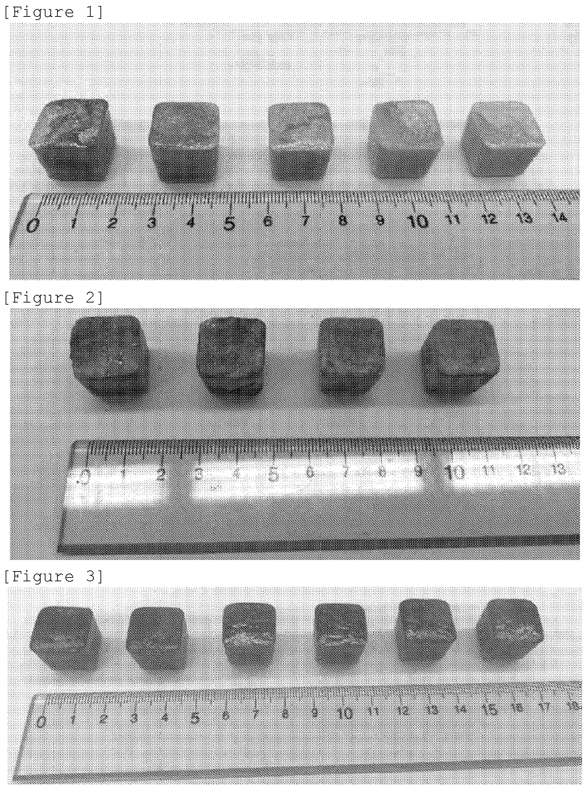

The photograph in Figure 1 shows the appearance of the green tea solidified products prepared in Production Example 1-1 relating to the first invention. The green tea solidified products of Tests 1 through 5 are shown from left to right in Figure 1.

Production Example 1-1 showed that the moisture resistance was extremely poor when the green tea solidified product did not contain dextrin (Test 1). The inclusion of dextrin (Tests 2 through 5), on the other hand, allowed good beverage solidified products to be prepared and resulted in better moisture resistance, while a dextrin content greater than 28% (Tests 3 through 5), in particular, resulted in considerably higher moisture resistance. The green tea beverages prepared by dissolving the solidified products of Tests 2 through 5 in appropriate amounts of water were suitable for drinking.

Production Example 1-2: Preparation of Green Tea Solidified Product

Green tea solidified products were prepared in the same manner as in Production Example 1-1 per the formulations shown in Table 3 to give green tea solidified products of varying density. The mass [g] per block of the resulting green tea solidified products was determined (average of 10 blocks) and, in the same manner as in Production Example 1-1, the dextrin content and monosaccharide content were then determined, and the moldability, shape retention, moisture resistance, and instant solubility were assessed. The results are shown in Table 3.

[Table 3]

| | Test 6 | Test 7 | Test 8 | Test 9 | Test 10 | Test 11 |
|---|---|---|---|---|---|---|
| Block mass (g/block) | 0.72 | 1 | 1.25 | 1.55 | 1.83 | 2.2 |
| Density (g/cm$^3$) | 0.13 | 0.18 | 0.23 | 0.28 | 0.33 | 0.40 |
| Extracted solids (g/block) | 0.24 | 0.33 | 0.42 | 0.52 | 0.61 | 0.73 |
| Soluble solids content ratio (mass%) | 33.3 | 33.3 | 33.3 | 33.3 | 33.3 | 33.3 |
| Dextrin added (glblock) | 0.48 | 0.67 | 0.83 | 1.03 | 1.22 | 1.47 |
| Measured dextrin content (g/block) | 0.20 | 0.28 | 0.35 | 0.43 | 0.51 | 0.61 |
| Dextrin added/extracted solids ratio | 2.0 | 2.0 | 2.0 | 2.0 | 2.0 | 2.0 |
| Dextrin content ratio (mass%) | 28.3 | 28.3 | 28.1 | 28.0 | 27.8 | 27.6 |
| Saccharide content (g/block) | 0.04 | 0.06 | 0.07 | 0.09 | 0.11 | 0.13 |
| Saccharide content ratio (mass%) | 6.0 | 6.0 | 6.0 | 5.9 | 5.9 | 5.8 |
| Moldability | ○ | ○ | ○ | ○ | ○ | ○ |
| Shape retention | × | ○ | ○ | ○ | ○ | × |
| Moisture resistance | × | ○ | ○ | ○ | ◎ | ◎ |
| Instant solubility | ○ | ○ | ○ | ○ | ○ | ○ |

Production Example 1-2 showed that shape retention and moisture resistance were unsatisfactory in terms of product quality when the green tea solidified product had a density of 0.13 (Test 6). It appears that products with a low density have a greater surface area-to-weight ratio and are more affected by humidity. It was shown that products with a density of 0.18 or higher (Tests 7 through 10) had better properties in terms of moldability, shape retention, moisture resistance, and instant solubility. However, it was shown that a density of 0.40 or higher (Test 11) resulted in lower shape retention. Higher density results in a solidified product that is harder and thus stronger against impact, but on the other hand, it appears that the greater weight results in greater impact. The green tea beverages prepared by dissolving the solidified products of Tests 7 through 10 in appropriate amounts of water were suitable for drinking.

Production Example 1-3: Preparation of Green Tea Solidified Product

Green tea solidified products were prepared in the same manner as in Production Example 1-1 per the formulations shown in Table 4 using dextrins of varying DE value. The shape retention of the resulting green tea solidified products was assessed in the same manner as in Production Example 1-1. The resulting green tea solidified products were also dissolved in 300 mL of water to prepare green tea beverages, the turbidity was visually assessed, and the absorbance at 720 nm was determined. The results are shown in Table 4.

[Table 4]

| | Test 12 | Test 13 | Test 14 | Test 15 | Test 16 | Test 17 |
|---|---|---|---|---|---|---|
| Block mass (g/block) | 1.32 | 1.32 | 1.31 | 1.33 | 1.35 | 1.31 |
| Density (g/cm$^3$) | 0.24 | 0.24 | 0.24 | 0.24 | 0.24 | 0.24 |
| Extracted solids (g/block) | 0.44 | 0.44 | 0.44 | 0.44 | 0.45 | 0.44 |
| Soluble solids content ratio (mass%) | 33.3 | 33.3 | 33.3 | 33.3 | 33.3 | 33.3 |
| Dextrin added (g/block) | 0.88 | 0.88 | 0.87 | 0.89 | 0.90 | 0.87 |
| Measured dextrin content (g/block) | 0.38 | 0.38 | 0.38 | 0.38 | 0.39 | 0.38 |
| Dextrin added/extracted solids ratio | 2.0 | 2.0 | 2.0 | 2.0 | 2.0 | 2.0 |
| Dextrin content ratio (mass%) | 28.8 | 28.8 | 28.8 | 28.8 | 28.8 | 28.8 |
| Saccharide content (g/block) | 0.08 | 0.08 | 0.08 | 0.08 | 0.08 | 0.08 |
| Saccharide content ratio (mass%) | 6.1 | 6.1 | 6.1 | 6.1 | 6.1 | 6.1 |
| Dextrin DE value | 2-5 | 6-8 | 10-13 | 15-18 | 18-21 | 26-30 |
| Shape retention | ○ | ○ | ○ | ○ | ○ | ○ |
| Turbidity (visually assessed) | Yes | No | No | No | No | No |
| Absorbance (720 nm) | 0.023 | 0.017 | 0.016 | 0.015 | 0.015 | 0.016 |

Dextrins with low DE values are susceptible to aging, and when a green tea beverage is prepared from a green tea solidified product, the effect of such aging shows up in the form of turbidity. The green tea beverage prepared from green tea solidified product having a DE value of 2 to 5 (Test 12) was visually distinguishable by its turbidity, and the absorbance at 720 nm was significantly higher than that of the other test samples. No turbidity was visually apparent in the products containing dextrins having a DE value of 6 or more (Tests 13 through 17). The green tea beverages prepared by dissolving the solidified products of Tests 13 through 17 in appropriate amounts of water were suitable for drinking.

Production Example 2-1: Preparation of Black Tea Solidified Product

Solidified beverages were prepared of black tea extracted from completely fermented tea leaves (Camellia sinensis), the same leaves used for green tea.

Specifically, hot water was used to extract soluble solids from commercially available black tea leaves, and the solids were concentrated to prepare a black tea extract having a soluble solids concentration (Brix) of 15.1%. The black coffee extract and dextrin (Sandek #150; dextrose equivalent value: 15-18; by Sanwa Starch Co., Ltd.,) were then mixed per the formulations shown in Table 5 to prepare black tea beverages.

The resulting black tea beverages were poured into resin molds having a volume of 5.54 cm3, and were frozen by being allowed to stand overnight at -35°C. To prevent the frozen black tea beverages from melting, the molds were then placed in a sealable chamber, and the chamber was sealed. The beverages were dried by being allowed to stand overnight at a chamber pressure of 10 Pa or less and a temperature of 25°C, giving black tea solidified products.

The mass [g] per block of the resulting black tea solidified products was determined (average of 10 blocks) and in the same manner as in Production Example 1-1, the dextrin content and monosaccharide content were then determined, and the moldability, shape retention, moisture resistance, and instant solubility were assessed. The results are shown in Table 5.

[Table 5]

| | Test 18 | Test 19 | Test 20 | Test 21 | Test 22 |
|---|---|---|---|---|---|
| Block mass (g/block) | 0.63 | 1.33 | 1.84 | 1.98 | 2.10 |
| Density (g/cm$^3$) | 0.11 | 0.24 | 0.33 | 0.36 | 0.38 |
| Extracted solids (g/block) | 0.63 | 0.67 | 0.62 | 0.57 | 0.53 |
| Soluble solids content ratio (mass%) | 100,0 | 50.0 | 33.4 | 28.7 | 25.1 |
| Dextrin added (g/block) | 0 | 0.66 | 1.22 | 1.41 | 1.57 |
| Measured dextrin content (g/block) | 0 | 0.29 | 0.53 | 0.61 | 0.68 |
| Dextrin added/extracted solids ratio | 0 | 1.0 | 2.0 | 2.5 | 3.0 |
| Dextrin content ratio (mass%) | 0 | 21.6 | 28.8 | 30.8 | 32.4 |
| Saccharide content (g/block) | 0.04 | 0.07 | 0.10 | 0.10 | 0.11 |

(continued)

|  | Test 18 | Test 19 | Test 20 | Test 21 | Test 22 |
|---|---|---|---|---|---|
| Saccharide content ratio (mass%) | 5.8 | 5.4 | 5.2 | 5.2 | 5.1 |
| Moldability | × | ○ | ○ | ○ | ○ |
| Shape retention | - | ○ | ○ | × | × |
| Moisture resistance | - | ◎ | ◎ | ◎ | ◎ |
| Instant solubility | - | ○ | ○ | ○ | ○ |

Production Example 2-1 showed that the product could not be dried while retaining its shape when the black tea solidified product did not contain dextrin (Test 18). It was shown that products having a dextrin content ratio greater than 20% (Tests 19 and 20) had better moldability. However, a dextrin content ratio greater than 30% (Test 21) resulted in lower shape retention. This suggested that too great of a weight results in lower shape retention. The black tea beverages prepared by dissolving the solidified products of Tests 19 and 20 in appropriate amounts of water were suitable for drinking.

Production Example 2-2: Preparation of Oolong Tea Solidified Product

Solidified beverages were prepared of Oolong tea extracted from semi-fermented tea leaves (Camellia sinensis), the same leaves used for green tea.
Specifically, hot water was used to extract soluble solids from commercially available Oolong tea leaves, and the solids were concentrated to prepare an Oolong tea extract having a soluble solids concentration (Brix) of 18.3%. The Oolong tea extract and dextrin (Sandek #150; dextrose equivalent value: 15-18; by Sanwa Starch Co., Ltd.,) were then mixed per the formulations shown in Table 6 to prepare Oolong tea beverages.
The resulting Oolong tea beverages were poured into resin molds having a volume of 5.54 cm3, and were frozen by being allowed to stand overnight at -35°C. To prevent the frozen Oolong tea beverages from melting, the molds were then placed in a sealable chamber, and the chamber was sealed. The beverages were dried by being allowed to stand overnight at a chamber pressure of 10 Pa or less and a temperature of 25°C, giving Oolong tea solidified products.
The mass [g] per block of the resulting Oolong tea solidified products was determined (average of 10 blocks), and in the same manner as in Production Example 1-1, the dextrin content and monosaccharide content were then determined, and the moldability, shape retention, moisture resistance, and instant solubility were assessed. The results are shown in Table 6.

[Table 6]

|  | Test 23 | Test 24 | Test 25 |
|---|---|---|---|
| Block mass (g/block) | 0.86 | 0.97 | 1.07 |
| Density (g/cm$^3$) | 0.16 | 0.18 | 0.19 |
| Extracted solids (g/block) | 0.86 | 0.47 | 0.29 |
| Soluble solids content ratio (mass%) | 100 | 47.9 | 26.8 |
| Dextrin added (g/block) | 0 | 0.50 | 0.78 |
| Measured dextrin content (g/block) | 0 | 0.22 | 0.34 |
| Dextrin added/extracted solids ratio | 0 | 1.1 | 2.7 |
| Dextrin content ratio (mass%) | 0 | 22.4 | 31.5 |
| Saccharide content (g/block) | 0.05 | 0.05 | 0.05 |
| Saccharide content ratio (mass%) | 5.6 | 5.2 | 5.0 |
| Moldability | ○ | ○ | ○ |
| Shape retention | × | ○ | ○ |
| Moisture resistance | ◎ | ◎ | ◎ |
| Instant solubility | ○ | ○ | ○ |

Production Example 2-2 showed that the shape retention was poor when no dextrin was added to the Oolong tea solidified product (Test 23). The product quality was unsatisfactory. On the other hand, the addition of dextrin (Tests 24 and 25) resulted in better shape retention, indicating that good results were obtained at a dextrin content of 20% or more. The Oolong tea beverages prepared by dissolving the solidified products of Tests 24 and 25 in appropriate amounts of water were suitable for drinking.

Production Example 3: Preparation of Barley Tea Solidified Product

A barley tea solidified product was prepared as an example of a grain tea.
Specifically, a commercially available barley tea extract powder (Barley Tea Extract M3, by Sato Foods Industries Co., Ltd.) was dissolved in pure water to prepare a barley tea extract having a soluble solids concentration (Brix) of 25%. The barley tea extract and dextrin (Sandek #150; dextrose equivalent value: 15-18; by Sanwa Starch Co., Ltd.,) were then mixed per the formulations shown in Table 7 to prepare barley tea beverages.
The resulting barley tea beverages were poured into resin molds having a volume of 5.54 cm3, and were frozen by being allowed to stand overnight at -35°C. To prevent the frozen barley tea beverages from melting, the molds were then placed in a sealable chamber, and the chamber was sealed. The beverages were dried by being allowed to stand overnight at a chamber pressure of 10 Pa or less and a temperature of 25°C, giving barley tea solidified products.
The mass [g] per block of the resulting barley tea solidified products was determined (average of 10 blocks), and in the same manner as in Production Example 1-1, the dextrin content and monosaccharide content were then determined, and the moldability, shape retention, moisture resistance, and instant solubility were assessed. The results are shown in Table 7.

[Table 7]

|  | Test 26 | Test 27 | Test 28 | Test 29 |
|---|---|---|---|---|
| Block mass (g/block) | 1.38 | 1.37 | 1.36 | 1.37 |
| Density (g/cm$^3$) | 0.25 | 0.25 | 0.25 | 0.25 |
| Extracted solids (g/block) | 0.69 | 0.46 | 0.39 | 0.34 |
| Soluble solids content ratio (mass%) | 50.0 | 33.8 | 28.6 | 25.0 |
| Dextrin added (g/block) | 0.69 | 0.91 | 0.97 | 1.03 |
| Measured dextrin content (g/block) | 0.29 | 0.39 | 0.42 | 0.44 |
| Dextrin added/extracted solids ratio | 1.0 | 2.0 | 2.5 | 3.0 |
| Dextrin content ratio (mass%) | 21.3 | 28.4 | 30.5 | 32.2 |
| Saccharide content (g/block) | 0.07 | 0.07 | 0.07 | 0.07 |
| Saccharide content ratio (mass%) | 5.3 | 5.2 | 5.1 | 5.1 |
| Moldability | ◎ | ◎ | ◎ | ◎ |
| Shape retention | ○ | ○ | ○ | ○ |
| Moisture resistance | ◎ | ◎ | ◎ | ◎ |
| Instant solubility | ○ | ○ | ○ | ○ |

Production Example 3 showed that the barley tea solidified product had good product characteristics irrespective of the dextrin content.
The barley tea beverages prepared by dissolving the solidified products of Tests 26 through 29 in appropriate amounts of water were suitable for drinking.

Production Example 4: Preparation of Coffee Solidified Product

Commercially available roasted coffee beans were extracted using hot water to prepare a coffee extract having a soluble solids concentration (Brix) of 23%. The coffee extract and dextrin (Sandek #100; dextrose equivalent value: 10-13; by Sanwa Starch Co., Ltd.,) were then mixed per the formulations shown in Table 8 to prepare coffee beverages.
The resulting Coffee beverages were poured into resin molds having a volume of 5.54 cm3, and were frozen by being allowed to stand overnight at -35°C. To prevent the frozen coffee beverages from melting, the molds were then placed in a sealable chamber, and the chamber was sealed. The beverages were dried by being allowed to stand overnight at a chamber pressure of 10 Pa or less and a temperature of 25°C, giving coffee solidified products.
The mass [g] per block of the resulting coffee solidified products was determined (average of 10 blocks), and in the same manner as in Production Example 1-1, the dextrin content and monosaccharide content were then determined, and the moldability, shape retention, moisture resistance, and instant solubility were assessed. The results are shown in Table 8.

[Table 8]

| | Test 30 | Test 31 | Test 32 | Test 33 | Test 34 |
|---|---|---|---|---|---|
| Block mass (g/block) | 1.00 | 1.08 | 1.10 | 1.08 | 1.10 |
| Density (g/cm³) | 0.18 | 0.19 | 0.20 | 0.19 | 0.20 |
| Extracted solids (g/block) | 1.00 | 0.54 | 0.37 | 0.31 | 0.28 |
| Soluble solids content ratio (mass%) | 100 | 50.0 | 33.3 | 28.6 | 25.0 |
| Dextrin added (g/block) | 0 | 0.54 | 0.73 | 0.77 | 0.82 |
| Measured dextrin content (g/block) | 0 | 0.23 | 0.31 | 0.33 | 0.35 |
| Dextrin added/extracted solids ratio | 0 | 1.0 | 2.0 | 2.5 | 3.0 |
| Dextrin content ratio (mass%) | 0 | 21.2 | 28.3 | 30.3 | 32.0 |
| Saccharide content (g/block) | 0 | 0.03 | 0.04 | 0.04 | 0.04 |
| Saccharide content ratio (mass%) | 0 | 2.4 | 3.2 | 3.4 | 3.6 |
| Moldability | × | ○ | ○ | ○ | ○ |
| Shape retention | ○ | ○ | ○ | ○ | ○ |
| Moisture resistance | × | ○ | ◎ | ◎ | ◎ |
| Instant solubility | ○ | ○ | ○ | ○ | ○ |

Production Example 4 showed that the coffee solidified product which did not contain dextrin (Test 30) expanded and foamed during vacuum drying, making it difficult to retain its shape. On the other hand, the addition of dextrin (Tests 31 through 34) resulted in better moldability. A higher dextrin content ratio was also shown to result in better moisture resistance product characteristics. Coffee beverages prepared by dissolving the solidified products of Tests 31 through 34 in appropriate amounts of water were suitable for drinking.

[Second Invention]

Production Example 1: Preparation of Green Tea Solidified Product

A green tea extract having a soluble solids concentration (Brix) of 20% was prepared by extracting soluble solids from commercially available green tea leaves using hot water and concentrating the solids. The green tea extract and dextrin (Sandek #150; dextrose equivalent value: 15-18; by Sanwa Starch Co., Ltd.,) were then mixed per the formulations shown in Table 10 to prepare green tea beverages.

The resulting green tea beverages were poured into resin molds having a volume of 5.54 cm3, and were frozen by being allowed to stand overnight at -35°C. To prevent the frozen green tea beverages from melting, the molds were then placed in a sealable chamber, and the chamber was sealed. The beverages were dried by being allowed to stand overnight at a chamber pressure of 10 Pa or less and a temperature of 25°C, giving green tea solidified products.

The mass [g] per block of the resulting green tea solidified products was determined (average of 10 blocks), the dextrin content and monosaccharide content were then determined by the following procedures, and the moldability, shape retention, moisture resistance, and instant solubility were assessed. The results are shown in Table 10.

(Dextrin Content)

The dextrin content was determined by hydrolyzing the dextrin in the samples via enzymatic treatment, and then determining the amount of degraded glucose, which was converted to the dextrin value. The specific procedure is described in detail below.

0.5 g of beverage solidified product was dissolved in 50 mL of ion-exchange water, and the dissolved product was filtered using filter paper (No. 5B, by Toyo Roshi Co., Ltd.). To 5 mL of the filtrate were added 90 mL of 99.5% ethanol and 2 to 3 drops of saturated saline solution, and the mixture was allowed to stand overnight in a refrigerator.

The supernatant was filtered off using fiberglass filter paper (GS-25, by Toyo Roshi Co., Ltd.), 40 mL of 90% ethanol was stirred in, and the mixture was centrifuged at 2000 rpm for 10 minutes. The supernatant was filtered off using fiberglass filter paper (GS-25, Toyo Roshi Co., Ltd.), and portions of the filtrate were used as samples to check on the low-molecular weight sugar reaction by the phenol-sulfuric acid method. These operations were repeated until there were no longer any low-molecular weight sugar reactions, and the low-molecular weight sugars were extracted off from the samples.

The residue on the fiberglass filter paper was recovered in 30 mL of ion-exchange water, 10 mL of glucoamylase solution (1.5 g of AMYLOGLUCOSIDASE (Megazyme, E-AMGDD) that had been brought to a volume of 100 mL using 0.2 mol/L acetate buffer (pH 4.8)) was added, an enzymatic reaction was brought about for 2 hours at 37°C, the reaction solution was filtered using filter paper (No. 5B, by Toyo Roshi Co., Ltd.), and the filtrate was used as sample to quantify glucose using a glucose quantification kit (Glucose CII-Test Wako, by FUJIFILM Wako Pure Chemical Corporation; glucose standard solution concentration: 0 to 80 ug/mL). The dextrin content (measured value) was determined by the following equation based on the measured glucose content.

```
Dextrin content (measured value)=glucose content×0.9
```

The hydrolysis of dextrin is expressed as "dextrin+n water=n glucose", where the number of water molecules n needed to hydrolyze the dextrin is equal to the number of glucose molecules that are produced, allowing the weight of dextrin to be theoretically determined by subtracting the weight of water from the weight of the glucose that is produced. As the molecular weight of water and glucose are 18 and 180, respectively, the weight of dextrin can be determined by multiplying the weight of glucose by 0.9.

[Saccharide Content]

The concentration of saccharides (monosaccharides, disaccharides, and sugar alcohols) in the green tea solidified products was determined by high performance liquid chromatography. The specific procedure is described in detail below.

1 g of the beverage solidified product was dissolved in water (20 to 50 mL), the solution was filtered (membrane filter), and the concentration was then determined by high-performance chromatography per Analysis Method 1.

Analysis Method 1

Device: Chromaster (Hitachi High-Tech Corporation)
Detector: Photodetector 5440 (Hitachi High-Tech Corporation)
Column: Shodex Asahipack NH2P-50 4E, $\varphi$4.6 mm×250 mm (Showa Denko KK)
Column temperature: 40°C
Mobile phase: Solution A: Acetonitrile; Solution B: Water; Solution C: 10% phosphoric acid

Gradient:

[Table 9]

|  | 0 minutes | 30 minutes | 41 minutes | 41.1 minutes | 50 minutes | 50.1 minutes | 60 minutes |
|---|---|---|---|---|---|---|---|
| Solution A | 90% | 75% | 7 5% | 60% | 60% | 90% | 90% |
| Solution B | 5% | 20% | 20% | 35% | 35% | 5% | 5% |
| Solution C | 5% | 5% | 5% | 5% | 5% | 5% | 5% |

Flow rate: 1 mL/min
Injection volume: 10 $\mu$L
Fluorescence excitation wavelength: 330 nm
Fluorescence measurement wavelength: 470 nm
Post-column: Reaction solution: mixture of phosphoric acid, acetic acid and phenylhydrazine (220:180:6)

Reaction solution flow rate: 0.4 mL/min
Reaction temperature: 150°C

Samples were screened to see if they contained 0.1% or more of monosaccharides (fructose, glucose, mannose, arabinose, galactose, xylose, rhamnose, ribose, fucose), disaccharides (sucrose, maltose, lactose), or sugar alcohols (erythritol, xylitol, sorbitol, mannitol, maltitol, Palatinite, maltotriitol, maltotetraitol), and components containing 0.1% or more were quantitatively analyzed. The amount of water for dissolving the beverage solidified products may be adjusted to ensure better measurement accuracy. The filtrate may, or may not, be diluted depending on the saccharide concentration. Instead of the method described above (Analysis Method 1), saccharides may also be analyzed under conditions of analysis such as the following, provided that the detection sensitivity is adequate.

Analysis Method 2

Device: LC-20AD (Shimadzu Corporation)
Detector: Differential refractometer RID-20A (Shimadzu Corporation)
Column: Intersil NH$_2$, φ3.0 mm×150 mm (GL Sciences, Inc.)
Column temperature: 25°C
Mobile phase: Acetonitrile:water (80:20)
Flow rate: 0.7 mL/min
Injection volume: 5 μL

(Moldability)

The moldability of the solidified blocks was assessed based on the following criteria using 10 randomly selected blocks. The 10 blocks were rated the same.

∘: Visual assessment of the shapes confirmed that the blocks retained a rectangular shape without expanding or breaking apart.
×: Visual assessment of the shapes confirmed that the blocks expanded or broke apart, and failed to retain a rectangular shape.

(Shape Retention)

Five solidified blocks were allowed to naturally drop from a height of 65 cm five times. The five dropped blocks were collected in descending order of volume. The weight of the five dropped blocks was assessed based on the following criteria by calculating the weight ratio relative to the weight of the five blocks before they were dropped.

◎: Weight ratio of 90% or more.
∘: Weight ratio of 60% to less than 90%.
×: Weight ratio less than 60%.

(Moisture Resistance)

The solidified blocks were allowed to stand for 24 hours at a temperature of 35°C and a humidity of 60%, the length of one side was measured, and the shrinkage rate based on the length of the one side prior to the test was assessed using the following criteria. The average of three randomly selected blocks was calculated.

◎: Shrinkage rate of less than 2%.
∘: Shrinkage rate of 2% to less than 5%.
×: Shrinkage of 5% or more.

(Instant Solubility)

300 g of RO water was placed in a 300 mL beaker, and one solidified block was placed in the beaker while stirred at 500 rpm using a stirrer (PC-420D, by CORNING). The time it took the solidified block to dissolve in water until the solids were no longer visible was measured, and this dissolution time was assessed based on the following criteria. The average of two randomly selected blocks was calculated.

◎: Dissolution time of less than 30 seconds.

○: Dissolution time of 30 seconds to less than 180 seconds.

×: Dissolution time of 180 seconds or more.

In Table 10, "extracted solids [g/block]" refers to the soluble solids extracted from green tea leaves per block. The "soluble solids content ratio [mass %]" is the "extracted solids"="block mass"×100. The "dextrin content ratio [mass%]" is the "measured dextrin content"÷"block mass"×100. The "saccharide content ratio [mass%]" is the "content of saccharides (monosaccharides+disaccharides+sugar alcohols)"÷"block mass"×100.

[Table 10]

|  | Test 1 | Test 2 | Test 3 | Test 4 | Test 5 |
|---|---|---|---|---|---|
| Block mass (g/block) | 0.92 | 0.93 | 0.95 | 0.97 | 0.99 |
| Density (g/cm$^3$) | 0.17 | 0.17 | 0.17 | 0.18 | 0.18 |
| Extracted solids (g/block) | 0.92 | 0.90 | 0.82 | 0.70 | 0.58 |
| Soluble solids content ratio (mass%) | 100 | 97.1 | 86.2 | 72.0 | 58.1 |
| Dextrin added (g/block) | 0.00 | 0.03 | 0.13 | 0.27 | 0.41 |
| Measured dextrin content (g/block) | 0.00 | 0.01 | 0.03 | 0.07 | 0.11 |
| Dextrin added/extracted solids ratio | 0.0 | 0.0 | 0.2 | 0.4 | 0.7 |
| Dextrin content ratio (mass%) | 0.0% | 0.7% | 3.4% | 7.0% | 10.7% |
| Saccharide content (g/block) | 0.08 | 0.08 | 0.08 | 0.07 | 0.07 |
| Saccharide content ratio (mass%) | 8.6% | 8.4% | 8.0% | 7.5% | 7.0% |
| Moldability | ○ | ○ | ○ | ○ | ○ |
| Shape retention | ○ | ○ | ○ | ○ | ○ |
| Moisture resistance | × | ○ | ◎ | ◎ | ◎ |
| Instant solubility | ○ | ○ | ○ | ○ | ○ |

Production Example 1 showed that the moisture resistance was extremely poor when the green tea solidified product did not contain dextrin (Test 1). The inclusion of dextrin (Tests 2 through 5), on the other hand, allowed good beverage solidified products to be prepared and resulted in better moisture resistance, while a dextrin content greater than 3% (Tests 3 through 5), in particular, resulted in considerably higher moisture resistance. The green tea beverages prepared by dissolving the solidified products of Tests 2 through 5 in appropriate amounts of water were suitable for drinking.

Production Example 2: Preparation of Green Tea Solidified Product

Dextrin was blended with varying amounts of finely ground tea leaves to prepare green tea solidified products in the same manner as in Production Example 1 per the formulations shown in Table 11. The finely ground tea leaves that were used had been obtained by processing commercially available green tea leaves using an air swept pulverizer. The pulverization standard was that no residue should be left over on the mesh after 20 g of pulverized material dispersed in 2 L of water had passed through 100 mesh. The particle diameter of 90% of the total volume ($D_{90}$) of the pulverized product was 112 um. The mass [g] per block of the resulting green tea solidified products was determined (average of 10 blocks), and in the same manner as in Production Example 1, the dextrin content and monosaccharide content were then determined, and the moldability, shape retention, moisture resistance, and instant solubility were assessed. The results are shown in Table 11.

Green tea beverages prepared by dissolving 1 g of green tea solidified product in 200 mL of ion-exchange water were tasted by a panel of 3 experts to assess the flavor. The panelists rated the beverages based on a 5-point system (2 points: very good; 1 point: good; 0 points: fair; -1 point: poor; -2 points: very poor), and the total score of the 3 panelists was determined. For the assessments, the three panelists agreed on how strong the flavor should be in order to grant points. The results are shown in Table 11.

In Table 11, the "finely ground tea leaf content ratio [mass%]" is the "content of finely ground tea leaves"÷"block mass"×100.

[Table 11]

|  | Test 6 | Test 7 | Test 8 | Test 9 | Test 10 | Test 11 | Test 12 |
|---|---|---|---|---|---|---|---|
| Block mass (g/block) | 1.37 | 1.37 | 1.35 | 1.47 | 1.77 | 1.96 | 2.12 |

(continued)

|  | Test 6 | Test 7 | Test 8 | Test 9 | Test 10 | Test 11 | Test 12 |
|---|---|---|---|---|---|---|---|
| Density (g/cm³) | 0.25 | 0.25 | 0.24 | 0.27 | 0.32 | 0.35 | 0.38 |
| Extracted solids (g/block) | 0.42 | 0.42 | 0.42 | 0.45 | 0.54 |  | 0.65 |
| Soluble solids content ratio (mass%) | 30.8 | 30.8 | 30.8 | 30.8 | 30.8 | 30.8 | 30.8 |
| Dextrin added (g/block) | 0.84 | 0.84 | 0.83 | 0.90 | 1.09 | 1.21 | 1.30 |
| Measured dextrin content (g/block) | 0.36 | 0.36 | 0.36 | 0.38 | 0.39 | 0.40 | 0.40 |
| Dextrin added/extracted solids ratio | 2.0 | 2.0 | 2.0 | 2.0 | 2.0 | 2.0 | 2.0 |
| Dextrin content ratio (mass%) | 26.6% | 26.6% | 26.6% | 25.1% | 22.2% | 20.5% | 19.0% |
| Saccharide content (g/block) | 0.08 | 0.08 | 0.08 | 0.08 | 0.08 | 0.09 | 0.09 |
| Saccharide content ratio (mass%) | 5.6% | 5.6% | 5.6% | 5.4% | 4.7% | 4.3% | 4.0% |
| Content finely ground tea leaves (mg/block) | 0.00 | 0.55 | 1.08 | 102.7 | 588.9 | 903.0 | 1209.5 |
| Content ratio of finely ground tea leaves (mass%) | 0% | 0.04% | 0.08% | 7.0% | 33.3% | 46.1% | 57.1% |
| Moldability | ○ | ○ | ○ | ○ | ○ | ○ | ○ |
| Shape retention | ○ | ○ | ○ | ○ | ○ | ○ | ○ |
| Moisture resistance | ◎ | ◎ | ◎ | ◎ | ◎ | ◎ | ◎ |
| Instant solubility | ○ | ○ | ○ | ○ | × | × | × |
| Appearance | 1 | 2 | 3 | 6 | 6 | 4 | 3 |
| Flavor | 0 | 3 | 6 | 6 | 6 | 4 | 1 |

Production Example 2 showed that the green tea solidified products had an attractive appearance and good flavor when the content of the finely ground tea leaves was as much as 46.1% by mass, but that when the content of finely ground tea leaves was 33.3% by mass or more (Tests 10 through 12), the instant solubility was poor, preventing a green tea beverage could from being quickly prepared. It was also shown that green tea beverages prepared from green tea solidified products that contained 0.040 to 46.1% by mass of ground tea leaves had more flavor and were better-tasting than the beverage obtained from the product containing no finely ground tea leaves (Test 6).

Production Example 3: Preparation of Green Tea Solidified Product

Dextrin was blended with finely ground tea leaves of varying particle size to prepare green tea solidified products in the same manner as in Production Example 1 per the formulations shown in Table 12. The mass [g] per block of the resulting green tea solidified products was determined (average of 10 blocks), and in the same manner as in Production Example 1, the dextrin content and monosaccharide content were then determined, and the moldability, shape retention, moisture resistance, and instant solubility were assessed. In the same manner as in Production Example 2, green tea beverages were prepared from the resulting green tea solidified products, and the appearance and taste were assessed. The results are shown in Table 12.

[Table 12]

|  | Test 13 | Test 14 | Test 15 | Test 16 |
|---|---|---|---|---|
| Block mass (g/block) | 1.77 | 1.76 | 1.78 | 1.76 |
| Density (g/cm³) | 0.32 | 0.32 | 0.32 | 0.32 |
| Extracted solids (g/block) | 0.51 | 0.46 | 0.46 | 0.46 |
| Soluble solids content ratio (mass%) | 29.0 | 25.9 | 25.9 | 25.9 |
| Dextrin added (g/block) | 1.03 | 0.91 | 0.92 | 0.91 |
| Measured dextrin content (g/block) | 0.44 | 0.44 | 0.45 | 0.44 |
| Dextrin added/extracted solids ratio | 2.0 | 2.0 | 2.0 | 2.0 |
| Dextrin content ratio (mass%) | 24.9% | 24.9% | 25.0% | 24.9% |
| Saccharide content (g/block) | 0.09 | 0.09 | 0.09 | 0.09 |
| Saccharide content ratio (mass%) | 5.3% | 5.3% | 5.3% | 5.3% |
| Particle size of 90% of total volume ($D_{90}$) of finely ground tea leaves (μm) | 19 | 55 | 112 | 233 |

(continued)

|  | Test 13 | Test 14 | Test 15 | Test 16 |
|---|---|---|---|---|
| Content finely ground tea leaves (mg/block) | 102.1 | 101.5 | 103.0 | 101.5 |
| Content ratio of finely ground tea leaves (mass%) | 5.8% | 5.8% | 5.8% | 5.8% |
| Moldability | ○ | ○ | ○ | ○ |
| Shape retention | ○ | ○ | ○ | ○ |
| Moisture resistance | ◎ | ◎ | ◎ | ◎ |
| Instant solubility | ○ | ○ | ○ | ○ |
| Appearance | 5 | 5 | 2 | -3 |
| Flavor | 6 | 2 | 2 | -3 |

The photograph in Figure 2 shows the appearance of the green tea solidified products prepared in Production Example 3 relating to the second invention. The green tea solidified products of Test 13 through Test 16 are shown from left to right in Figure 2.

Production Example 3 shows that the green tea beverage prepared from the green tea solidified product in which the particle diameter of 90% of the total volume of finely ground tea leaves was 233 um (Test 16) was rated as having an undesirable appearance and taste. On the other hand, when the particle diameter of 90% of the total volume of finely ground tea leaves was 19 to 112 um (Tests 13 through 15), the green tea solidified products had suitable moldability, durability, moisture resistance, and instant solubility, and the resulting green tea beverages were more attractive and better-tasting.

[Third Invention]

Production Example 1: Preparation of Barley Tea Solidified Product

A barley tea extract having a soluble solids concentration (Brix) of 25% was prepared by extracting soluble solids from commercially available roasted barley seeds using hot water and concentrating the solids. The barley tea extract and dextrin (Sandek #150; dextrose equivalent value: 15-18; by Sanwa Starch Co., Ltd.,) were then mixed per the formulations shown in Table 13 to prepare barley tea beverages. The resulting barley tea beverages were poured into resin molds having a volume of 5.54 cm3, and were frozen by being allowed to stand overnight at -35°C. To prevent the frozen barley tea beverages from melting, the molds were then placed in a sealable chamber, and the chamber was sealed. The beverages were dried by being allowed to stand overnight at a chamber pressure of 10 Pa or less and a temperature of 25°C, giving barley tea solidified products.

The mass [g] per block of the resulting barley tea solidified products was determined (average of 10 blocks), the dextrin content and monosaccharide content were then determined by the following procedures, and the moldability, shape retention, moisture resistance, and instant solubility were assessed. The results are shown in Table 13.

(Dextrin Content)

The dextrin content was determined by hydrolyzing the dextrin in the samples via enzymatic treatment, and then determining the amount of degraded glucose, which was converted to the dextrin value. The specific procedure is described in detail below.

0.5 g of beverage solidified product was dissolved in 50 mL of ion-exchange water, and the dissolved product was filtered using filter paper (No. 5B, by Toyo Roshi Co., Ltd.). To 5 mL of the filtrate were added 90 mL of 99.5% ethanol and 2 to 3 drops of saturated saline solution, and the mixture was allowed to stand overnight in a refrigerator.

The supernatant was filtered off using fiberglass filter paper (GS-25, by Toyo Roshi Co., Ltd.), 40 mL of 90% ethanol was stirred in, and the mixture was centrifuged at 2000 rpm for 10 minutes. The supernatant was filtered off using fiberglass filter paper (GS-25, Toyo Roshi Co., Ltd.), and portions of the filtrate were used as samples to check on the low-molecular weight sugar reaction by the phenol-sulfuric acid method. These operations were repeated until there were no longer any low-molecular weight sugar reactions, and the low-molecular weight sugars were extracted off from the samples.

The residue on the fiberglass filter paper was recovered in 30 mL of ion-exchange water, 10 mL of glucoamylase solution (1.5 g of AMYLOGLUCOSIDASE (Megazyme, E-AMGDD) that had been brought to a volume of 100 mL using 0.2 mol/L acetate buffer (pH 4.8)) was added, an enzymatic reaction was brought about for 2 hours at 37°C, the reaction solution was filtered using filter paper (No. 5B, by Toyo Roshi Co., Ltd.), and the filtrate was used as sample to quantify glucose using a glucose quantification kit (Glucose CII-Test Wako, by FUJIFILM Wako Pure Chemical Corporation; glucose standard solution concentration: 0 to 80 $\mu$g/mL).
The dextrin content (measured value) was determined by the following equation based on the measured glucose content.

```
Dextrin content (measured value)=glucose content×0.9
```

The hydrolysis of dextrin is expressed as "dextrin+n water=n glucose", where the number of water molecules n needed to hydrolyze the dextrin is equal to the number of glucose molecules that are produced, allowing the weight of dextrin to be theoretically determined by subtracting the weight of water from the weight of the glucose that is produced. As the molecular weight of water and glucose are 18 and 180, respectively, the weight of dextrin can be determined by multiplying the weight of glucose by 0.9.

[Saccharide Content]

The concentration of saccharides (monosaccharides, disaccharides, and sugar alcohols) in the barley tea solidified products was determined by high performance liquid chromatography. The specific procedure is described in detail below.
1 g of the beverage solidified product was dissolved in 20 mL of water, the solution was filtered (membrane filter), and the concentration was then determined by high-performance chromatography per the following conditions.
Device: LC-20AD (Shimadzu Corporation)
Detector: Fluorescence Detector RF-20A$_{XS}$ (Shimadzu Corporation)
Column: Wakosil 5NH$_2$, $\varphi$4.6 mm×250 mm (GL Sciences, Inc.) Column temperature: 25°C
Mobile phase: Acetonitrile:water (75:25)
Flow rate: 1 mL/min
Injection volume: 2 $\mu$L
Fluorescence excitation wavelength: 320 nm
Fluorescence measurement wavelength: 430 nm
Post-column: Reaction solution: 3% boric acid solution containing 1% L-arginine

Reaction flow rate: 0.7 mL/min
Reaction temperature: 150°C

Samples were screened to see if they contained 0.1% or more of monosaccharides (fructose, glucose, mannose, arabinose, galactose, xylose, rhamnose, ribose, fucose), disaccharides (sucrose, maltose, lactose), or sugar alcohols (erythritol, xylitol, sorbitol, mannitol, maltitol, Palatinite, maltotriitol, maltotetraitol), and components containing 0.1% or more were quantitatively analyzed.

(Moldability)

The moldability of the solidified blocks was assessed based on the following criteria using 10 randomly selected blocks. The 10 blocks were rated the same.

o: Visual assessment of the shapes confirmed that the blocks retained a rectangular shape without expanding or breaking apart.
×: Visual assessment of the shapes confirmed that the blocks expanded or broke apart, and failed to retain a rectangular shape.

(Shape Retention)

Five solidified blocks were allowed to naturally drop from a height of 65 cm five times. The five dropped blocks were collected in descending order of volume. The weight of the five dropped blocks was assessed based on the following criteria by calculating the weight ratio relative to the weight of the five blocks before they were dropped.

◎: Weight ratio of 90% or more.
o: Weight ratio of 60% to less than 90%.

×: Weight ratio less than 60%.

(Moisture Resistance)

The solidified blocks were allowed to stand for 24 hours at a temperature of 35°C and a humidity of 60%, the length of one side was measured, and the shrinkage rate based on the length of the one side prior to the test was assessed using the following criteria. The average of three randomly selected blocks was calculated.

◎: Shrinkage rate of less than 2%.
o: Shrinkage rate of 2% to less than 5%.
×: Shrinkage of 5% or more.

(Instant Solubility)

300 g of RO water was placed in a 300 mL beaker, and one solidified block was placed in the beaker while stirred at 500 rpm using a stirrer (PC-420D, by CORNING). The time it took the solidified block to dissolve in water until the solids were no longer visible was measured, and this dissolution time was assessed based on the following criteria. The average of two randomly selected blocks was calculated.

◎: Dissolution time of less than 30 seconds.
○: Dissolution time of 30 seconds to less than 180 seconds.
×: Dissolution time of 180 seconds or more.

In Table 13, "extracted solids [g/block]" refers to the soluble solids extracted from barley tea leaves per block. The "soluble solids content ratio [mass %]" is the "extracted solids"="block mass"×100. The "dextrin content ratio [mass%]" is the "measured dextrin content"÷"block mass"×100. The "saccharide content ratio [mass%]" is the "content of saccharides (monosaccharides+disaccharides+sugar alcohols)"÷"block mass"×100.

[Table 13]

|  | Test 1 | Test 2 | Test 3 | Test 4 |
|---|---|---|---|---|
| Block mass (g/block) | 1.38 | 1.37 | 1.36 | 1.37 |
| Density (g/cc) | 0.25 | 0.25 | 0.25 | 0.25 |
| Extracted solids (g/block) | 0.69 | 0.46 | 0.39 | 0.34 |
| Soluble solids content ratio (mass%) | 50.0 | 33.8 | 28.6 | 25.0 |
| Dextrin added (g/block) | 0.69 | 0.91 | 0.97 | 1.03 |
| Measured dextrin content (g/block) | 0.29 | 0.39 | 0.42 | 0.44 |
| Dextrin added/extracted solids ratio | 1.0 | 2.0 | 2.5 | 3.0 |
| Dextrin content ratio (mass%) | 21.3% | 28.4% | 30.5% | 32.2% |
| Saccharide content (g/block) | 0.07 | 0.07 | 0.07 | 0.07 |
| Saccharide content ratio (mass%) | 5.3% | 5.2% | 5.1% | 5.1% |
| Moldability | ◎ | ◎ | ◎ | ◎ |
| Shape retention | ◎ | ◎ | ◎ | ◎ |
| Moisture resistance | ◎ | ◎ | ◎ | ◎ |
| Instant solubility | ○ | ○ | ○ | ○ |

Production Example 1 showed that good beverage solidified products could be prepared when the barley tea solidified products contained dextrin (Tests 1 through 4). The barley tea beverages prepared by dissolving the solidified products of Tests 1 through 4 in appropriate amounts of water were suitable for drinking.

Production Example 2: Preparation of Barley Tea Solidified Product

Barley tea solidified products were prepared in the same manner as in Production Example 1 per the formulations shown in Table 14 to give barley tea solidified products of varying density. The mass [g] per block of the resulting barley tea solidified products was determined (average of 10 blocks), and in the same manner as in Production Example 1, the dextrin content and monosaccharide content were then determined, and the moldability, shape retention, moisture resistance, and instant solubility were assessed. The results are shown in Table 14.

Barley tea beverages prepared by dissolving 1 g of barley tea solidified product in 200 mL of ion-exchange water were tasted by a panel of 3 experts to assess the strength of the barley tea. The panelists rated the beverages based on a 5-point system (2 points: very good; 1 point: good; 0 points: fair; -1 point: poor; -2 points: very poor), and the total score of the 3 panelists was determined. For the assessments, the three panelists agreed on how strong the beverages should be in order to grant points. The results are shown in Table 14.

[Table 14]

|  | Test 5 | Test 6 | Test 7 | Test 8 | Test 9 | Test 10 |
|---|---|---|---|---|---|---|
| Block mass (g/block) | 0.84 | 1.12 | 1.43 | 1.15 | 2.12 | 2.45 |
| Density (g/cc) | 0.15 | 0.20 | 0.26 | 0.32 | 0.38 | 0.44 |
| Extracted solids (g/block) | 0.34 | 0.45 | 0.57 | 0.70 | 0.85 | 0.98 |
| Soluble solids content ratio (mass%) | 40.0 | 40.0 | 40.0 | 40.0 | 40.0 | 40.0 |
| Dextrin added (g/block) | 0.50 | 0.67 | 0.86 | 1.05 | 1.27 | 1.47 |
| Measured dextrin content (g/block) | 0.22 | 0.29 | 0.37 | 0.45 | 0.54 | 0.63 |
| Dextrin added/extracted solids ratio | 1.5 | 1.5 | 1.5 | 1.5 | 1.5 | 1.5 |
| Dextrin content ratio (mass%) | 25.6% | 25.6% | 25.7% | 25.8% | 25.3% | 25.7% |
| Saccharide content (g/block) | 0.04 | 0.06 | 0.07 | 0.09 | 0.11 | 0.13 |
| Saccharide content ratio (mass%) | 5.2% | 5.2% | 5.2% | 5.2% | 5.1% | 5.2% |
| Moldability | ○ | ○ | ○ | ○ | ○ | ○ |
| Shape retention | ○ | ○ | ○ | ○ | ○ | × |
| Moisture resistance | ◎ | ◎ | ◎ | ◎ | ◎ | ◎ |
| Instant solubility | ○ | ○ | ○ | ○ | ○ | ○ |
| Strength of barley tea | -6 | -6 | -2 | 0 | 2 | 3 |

Production Example 2 showed that the strength of the barley tea was unsuitable when the barley tea solidified product had a density of 0.26 g/cm$^3$ or less (Tests 5 through 7). It was shown that a density of 0.44 g/cm$^3$ or higher (Test 10) resulted in unsatisfactory shape retention. The barley tea beverages prepared by dissolving the solidified products of Tests 8 and 9 in appropriate amounts of water were suitable for drinking.

Production Example 3: Preparation of Barley Tea Solidified Product

Dextrin was blended with finely ground barley to prepare barley tea solidified products in the same manner as in Production Example 1 per the formulations shown in Table 15. The finely ground barley that was used had been obtained by pulverizing roasted barley using an air swept pulverizer, which was then sized to 60 mesh. The resulting barley tea solidified products were dissolved in 300 mL of water to prepare barley tea beverages, the appearance was visually assessed, and the absorbance at 720 nm was determined. The beverages were then tasted by a panel of 3 experts to globally assess aroma, flavor, smoothness, and coarseness. The panelists rated the beverages based on a 5-point system (2 points: very good; 1 point: good; 0 points: fair; -1 point: poor; -2 points: very poor), and the total score of the 3 panelists was determined. For the assessments, the three panelists agreed on how strong the flavor should be in order to grant points. The results are shown in Table 15.

In Table 15, the "finely ground barley content ratio [mass%]" is the "content of finely ground barley"÷"block mass"×100.

[Table 15]

|  | Test 11 | Test 12 | Test 13 | Test 14 | Test 15 | Test 16 |
|---|---|---|---|---|---|---|
| Block mass (g/block) | 1.68 | 1.70 | 1.72 | 1.73 | 1.74 | 1.81 |
| Density (g/cc) | 0.30 | 0.31 | 0.31 | 0.31 | 0.31 | 0.33 |
| Extracted solids (g/block) | 0.67 | 0.68 | 0.69 | 0.68 | 0.68 | 0.68 |
| Soluble solids content ratio (mass%) | 40.0 | 40.0 | 39.9 | 39.4 | 38.8 | 37.8 |
| Dextrin added (g/block) | 1.01 | 1.02 | 1.03 | 1.02 | 1.01 | 1.03 |
| Measured dextrin content (g/block) | 0.43 | 0.44 | 0.44 | 0.44 | 0.44 | 0.44 |
| Dextrin added/extracted solids ratio | 1.5 | 1.5 | 1.5 | 1.5 | 1.5 | 1.5 |

(continued)

| | Test 11 | Test 12 | Test 13 | Test 14 | Test 15 | Test 16 |
|---|---|---|---|---|---|---|
| Dextrin content ratio (mass%) | 25.8% | 25.7% | 25.6% | 25.4% | 25.1% | 24.6% |
| Saccharide content (g/block) | 0.09 | 0.09 | 0.09 | 0.09 | 0.09 | 0.09 |
| Saccharide content ratio (mass%) | 5.2% | 5.2% | 5.2% | 5.2% | 5.1% | 5.0% |
| Content of finely ground barley (g/block) | 0.00 | 0.00 | 0.01 | 0.03 | 0.05 | 0.10 |
| Content ratio of finely ground barley (Mass%) | 0.0% | 0.1% | 0.4% | 1.5% | 2.9% | 5.6% |
| Absorbance (720 nm) | 0.02 | 0.02 | 0.03 | 0.05 | 0.08 | 0.15 |
| Appearance | 0 | 1 | 3 | 6 | 4 | 2 |
| Aroma | 0 | 4 | 5 | 6 | 6 | 6 |
| Flavor | 1 | 4 | 5 | 6 | 6 | 6 |
| Smoothness | 5 | 6 | 6 | 6 | 4 | 2 |
| Roughness | 4 | 6 | 6 | 6 | 4 | 3 |
| Global assessment | 0 | 3 | 5 | 6 | 6 | 3 |

The photograph in Figure 3 shows the appearance of the barley tea solidified products prepared in Production Example 3 relating to the third invention. The barley tea solidified products of Tests 11 through 16 are shown from left to right in Figure 3.

Barley tea beverages prepared from barley tea solidified products containing 0.1 to 5.6% by mass of finely ground barley (Tests 12 through 15) were globally assessed more favorably as being better in terms of aroma, flavor, smoothness, and roughness compared with the beverage of Test 11, which contained no finely ground barley. The beverage of Test 16 was rated relatively low in terms of appearance, smoothness, and roughness, but was globally assessed as being better than the beverage of Test 11, which contained no finely ground barley. These results demonstrate that the barley tea beverages prepared by dissolving the solidified products of Tests 12 through 16 in appropriate amounts of water were suitable for drinking.

[Fourth Invention]

Production Example 1: Preparation of Coffee Solidified Product

Coffee extract having a soluble solids concentration (Brix) of 10.2% was prepared by extracting soluble solids from commercially available roasted coffee beans using hot water and concentrating the solids. The coffee extract and dextrin (Sandek #100; dextrose equivalent value: 10-13; by Sanwa Starch Co., Ltd.,) were then mixed per the formulations shown in Table 17 to prepare coffee beverages.

The resulting Coffee beverages were poured into resin molds having a volume of 5.54 cm3, and were frozen by being allowed to stand overnight at -35°C. To prevent the frozen coffee beverages from melting, the molds were then placed in a sealable chamber, and the chamber was sealed. The beverages were dried by being allowed to stand overnight at a chamber pressure of 10 Pa or less and a temperature of 25°C, giving coffee solidified products.

The mass [g] per block of the resulting coffee solidified products was determined (average of 10 blocks), the dextrin content and monosaccharide content were then determined by the following procedures, and the moldability, shape retention, moisture resistance, and instant solubility were assessed. The results are shown in Table 17.

(Dextrin Content)

The dextrin content was determined by hydrolyzing the dextrin in the samples via enzymatic treatment, and then determining the amount of degraded glucose, which was converted to the dextrin value. The specific procedure is described in detail below.

0.5 g of beverage solidified product was dissolved in 50 mL of ion-exchange water, and the dissolved product was filtered using filter paper (No. 5B, by Toyo Roshi Co., Ltd.). To 5 mL of the filtrate were added 90 mL of 99.5% ethanol and 2 to 3 drops of saturated saline solution, and the mixture was allowed to stand overnight in a refrigerator.

The supernatant was filtered off using fiberglass filter paper (GS-25, by Toyo Roshi Co., Ltd.), 40 mL of 90% ethanol was stirred in, and the mixture was centrifuged at 2000 rpm for 10 minutes. The supernatant was filtered off using fiberglass filter paper (GS-25, Toyo Roshi Co., Ltd.), and portions of the filtrate were used as samples to check on the low-molecular weight sugar reaction by the phenol-sulfuric acid method. These operations were repeated until there were no longer any low-molecular weight sugar reactions, and the low-molecular weight sugars were extracted off from the samples.

The residue on the fiberglass filter paper was recovered in 30 mL of ion-exchange water, 10 mL of glucoamylase solution (1.5 g of AMYLOGLUCOSIDASE (Megazyme, E-AMGDD) that had been brought to a volume of 100 mL using 0.2 mol/L acetate buffer (pH 4.8)) was added, an enzymatic reaction was brought about for 2 hours at 37°C, the reaction solution was filtered using filter paper (No. 5B, by Toyo Roshi Co., Ltd.), and the filtrate was used as sample to quantify glucose using a glucose quantification kit (Glucose CII-Test Wako, by FUJIFILM Wako Pure Chemical Corporation; glucose standard solution concentration: 0 to 80 μg/mL). The dextrin content (measured value) was determined by the following equation based on the measured glucose content.

$$\text{Dextrin content (measured value)} = \text{glucose content} \times 0.9$$

The hydrolysis of dextrin is expressed as "dextrin+n water=n glucose," where the number of water molecules n needed to hydrolyze the dextrin is equal to the number of glucose molecules that are produced, allowing the weight of dextrin to be theoretically determined by subtracting the weight of water from the weight of the glucose that is produced. As the molecular weight of water and glucose are 18 and 180, respectively, the weight of dextrin can be determined by multiplying the weight of glucose by 0.9.

[Saccharide Content]

The concentration of saccharides (monosaccharides, disaccharides, and sugar alcohols) in the coffee solidified products was determined by high performance liquid chromatography. The specific procedure is described in detail below.
1 g of the beverage solidified product was dissolved in 20 mL of water, the solution was filtered (membrane filter), and the concentration was then determined by high-performance chromatography per the following conditions.

Device: Chromaster (Hitachi High-Tech Corporation)
Detector: Photodetector 5440 (Hitachi High-Tech Corporation)
Column: Shodex Asahipack NH2P-50 4E, φ4.6 mm×250 mm (Showa Denko KK)
Column temperature: 40°C
Mobile Phase:

Solution A: Acetonitrile
Solution B: Water
Solution C: 10% phosphoric acid

Gradient:

[Table 16]

|  | 0 minutes | 30 minutes | 41 minutes | 41.1 minutes | 50 minutes | 50.1 minutes | 60 minutes |
|---|---|---|---|---|---|---|---|
| **Solution A** | 90% | 75% | 75% | 60% | 60% | 90% | 90% |
| **Solution 8** | 5% | 20% | 20% | 35 % | 35% | 5% | 5% |
| **Solution C** | 5% | 5% | 5% | 5% | 5% | 5% | 5% |

Flow rate: 1 mL/min
Injection volume: 10 μL
Fluorescence excitation wavelength: 330 nm
Fluorescence measurement wavelength: 470 nm
Post-column: Reaction solution: mixture of phosphoric acid, acetic acid, and phenylhydrazine (220:180:6)

Reaction solution flow rate: 0.4 mL/min
Reaction temperature: 150°C

Samples were screened for monosaccharides (fructose, glucose, mannose, arabinose, galactose, xylose, rhamnose, ribose, fucose), disaccharides (sucrose, maltose, lactose), or sugar alcohols (erythritol, xylitol, sorbitol, mannitol, maltitol, Palatinite, maltotriitol, maltotetraitol), and components containing 0.1% or more were quantitatively analyzed. The filtrate may, or may not, be diluted depending on the saccharide concentration.

(Moldability)

The moldability of the solidified blocks was assessed based on the following criteria using 10 randomly selected blocks. The 10 blocks were rated the same.

o: Visual assessment of the shapes confirmed that the blocks retained a rectangular shape without expanding or breaking apart.
×: Visual assessment of the shapes confirmed that the blocks expanded or broke apart, and failed to retain a rectangular shape.

(Shape Retention)

Five solidified blocks were allowed to naturally drop from a height of 65 cm three times. The five dropped blocks were collected in descending order of volume. The weight of the five dropped blocks was assessed based on the following criteria by calculating the weight ratio relative to the weight of the five blocks before they were dropped.

◎: Weight ratio of 90% or more.
∘: Weight ratio of 60% to less than 90%.
×: Weight ratio less than 60%.

(Moisture Resistance)

The solidified blocks were allowed to stand for 24 hours at a temperature of 35°C and a humidity of 60%, the length of one side was measured, and the shrinkage rate based on the length of the one side prior to the test was assessed using the following criteria. The average of three randomly selected blocks was calculated.

◎: Shrinkage rate of less than 2%.
o: Shrinkage rate of 2% to less than 5%.
×: Shrinkage of 5% or more.

(Instant Solubility)

300 g of RO water was placed in a 300 mL beaker, and one solidified block was placed in the beaker while stirred at 500 rpm using a stirrer (PC-420D, by CORNING). The time it took the solidified block to dissolve in water until the solids were no longer visible was measured, and this dissolution time was assessed based on the following criteria. The average of two randomly selected blocks was calculated.

◎: Dissolution time of less than 30 seconds.
○: Dissolution time of 30 seconds to less than 180 seconds.
×: Dissolution time of 180 seconds or more.

In Table 17, "extracted solids [g/block]" refers to the soluble solids extracted from coffee beans per block. The "soluble solids content ratio [mass %]" is the "extracted solids"÷"block mass"×100. The "dextrin content ratio [mass%]" is the "measured dextrin content"÷"block mass"×100. The "saccharide content ratio [mass%]" is the "content of saccharides (monosaccharides+disaccharides+sugar alcohols)"÷"block mass"×100.

Coffee beverages prepared by dissolving 1 g of coffee solidified product in 200 mL of ion-exchange water were tasted by a panel of 3 experts for assessment of the strength of the coffee flavor and for global assessment. The panelists rated the beverages based on a 5-point system (2 points: very good; 1 point: good; 0 points: fair; -1 point: poor; -2 points: very poor), and the total score of the 3 panelists was determined. For the assessments, the three panelists agreed on how strong the flavor should be in order to grant points. The results are shown in Table 17.

[Table 17]

| | Test 1 | Test 2 | Test 3 | Test 4 | Test 5 |
|---|---|---|---|---|---|
| Block mass (g/block) | 0.90 | 0.93 | 0.97 | 1.00 | 1.02 |
| Density (g/cm$^3$) | 0.15 | 0.17 | 0.18 | 0.18 | 0.18 |
| Extract solids (g/block) | 0.68 | 0.59 | 0.50 | 0.17 | 0.06 |
| Soluble solids content ratio (mass%) | 75.7 | 63.7 | 51.7 | 16.9 | 5.4 |
| Dextrin added (g/block) | 0.22 | 0.34 | 0.47 | 0.83 | 0.96 |
| Measured dextrin content (g/block) | 0.09 | 0.15 | 0.20 | 0.36 | 0.41 |
| Dextrin added/extracted solids ratio | 0.3 | 0.6 | 0.9 | 4.9 | 17.4 |
| Dextrin content ratio (mass%) | 10.4% | 15.7% | 20.5% | 35.5% | 40.4% |
| Saccharide content (g/block) | 0.01 | 0.02 | 0.02 | 0.04 | 0.05 |
| Saccharide content ratio (mass%) | 1.2% | 1.8% | 2.3% | 4.0% | 4.6% |
| Moldability | ○ | ○ | ○ | ○ | ○ |
| Shape retention | ○ | ◎ | ◎ | ○ | ◎ |
| Moisture resistance | × | ○ | ○ | ◎ | ◎ |
| Instant solubility | ○ | ○ | ○ | ○ | ○ |
| Strength of coffee | 6 | 6 | 4 | -1 | -6 |

Production Example 1 showed that the moisture resistance was inferior when the coffee solidified product when the dextrin content was 10.4% by mass (Test 1). On the other hand, it was shown that that good beverage solidified products with better moldability, shape retention, moisture resistance, and instant solubility could be prepared when the dextrin content was in the range of 15.7 to 40.4% by mass (Tests 2 through 5). The coffee strength of the product in Test 5 was rated very low. This was attributed to the low soluble solids content of the product in Test 5. These results showed that the coffee beverages prepared by dissolving the coffee solidified products of Tests 2 through 4 in appropriate amounts of water were suitable for drinking.

Production Example 2: Preparation of Coffee Solidified Product Containing Finely Ground Coffee Beans

Coffee solidified products were prepared in the same manner as in Production Example 1 by blending various amounts of finely ground coffee beans with dextrin per the formulations shown in Table 18. The finely ground coffee beans that were used had been obtained by freezing roasted coffee beans using liquid nitrogen and then grinding the frozen beans using a jet mill. The particle diameter of 90% of the total volume (D90) of the finely ground coffee beans, as determined by laser diffraction, was 100 um. The resulting coffee solidified products were dissolved in 300 mL of water to prepare coffee beverages, which were visually assessed, and were tasted by a panel of 3 experts to globally assess aroma, flavor, smoothness, and roughness. The panelists rated the beverages based on a 5-point system (2 points: very good; 1 point: good; 0 points: fair; -1 point: poor; -2 points: very poor), and the total score of the 3 panelists was determined. For the assessments, the three panelists agreed on how strong the flavor should be in order to grant points. The results are shown in Table 18.
In Table 18, the "finely ground coffee bean content ratio [mass%]" is the "content of finely coffee beans"÷"block mass"×100.

[Table 18]

| | Test 6 | Test 7 | Test 8 | Test 9 | Test 10 | Test 11 | Test 12 |
|---|---|---|---|---|---|---|---|
| Block mass (g/block) | 1.64 | 1.62 | 1.65 | 1.65 | 1.72 | 1.90 | 2.25 |
| Density (g/cm$^3$) | 0.30 | 0.29 | 0.30 | 0.30 | 0.31 | 0.34 | 0.41 |
| Extract solids (g/block) | 0.55 | 0.54 | 0.54 | 0.53 | 0.54 | 0.54 | 0.56 |
| Soluble solids content ratio (mass%) | 33.3 | 33.2 | 32.8 | 32.3 | 31.3 | 28.6 | 25.1 |
| Dextrin added (g/block) | 1.09 | 1.08 | 1.08 | 1.07 | 1.08 | 1.09 | 1.13 |
| Measured dextrin content (g/block) | 0.46 | 0.45 | 0.46 | 0.45 | 0.46 | 0.48 | 0.50 |
| Dextrin added/extracted solids ratio | 2.0 | 2.0 | 2.0 | 2.0 | 2.0 | 2.0 | 2.0 |
| Dextrin content ratio (mass%) | 27.8% | 27.9% | 27.6% | 27.4% | 26.8% | 25.1% | 22.2% |
| Saccharide content (g/block) | 0.05 | 0.05 | 0.05 | 0.05 | 0.05 | 0.05 | 0.06 |

(continued)

|  | Test 6 | Test 7 | Test 8 | Test 9 | Test 10 | Test 11 | Test 12 |
|---|---|---|---|---|---|---|---|
| Saccharide content ratio (mass%) | 3.1% | 3.2% | 3.1% | 3.1% | 3.0% | 2.8% | 2.5% |
| Finely ground coffee bean content (g/block) | 0.00 | 0.01 | 0.03 | 0.05 | 0.11 | 0.27 | 0.57 |
| Finely ground coffee bean content ratio (mass%) | 0.0% | 0.3% | 1.6% | 3.0% | 6.2% | 14.4% | 25.5% |
| Moldability | ○ | ○ | ○ | ○ | ○ | ○ | ○ |
| Durability | ◎ | ○ | ○ | ○ | ○ | ○ | ○ |
| Instant solubility | ○ | ○ | ○ | ○ | ○ | ○ | ○ |
| Appearance | 1 | 3 | 6 | 6 | 6 | 5 | 4 |
| Aroma | 0 | 2 | 4 | 5 | 6 | 5 | 5 |
| Flavor | 1 | 4 | 6 | 6 | 6 | 5 | 4 |
| Smoothness | 4 | 5 | 5 | 4 | 4 | 3 | 1 |
| Roughness | 4 | 5 | 5 | 5 | 4 | 3 | 4 |
| Global assessment | 1 | 4 | 6 | 6 | 6 | 5 | 3 |

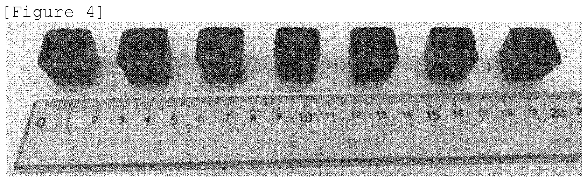

The photograph in Figure 4 shows the appearance of the coffee solidified products prepared in Production Example 2 relating to the fourth invention. The coffee solidified products of Tests 6 through 12 are shown from left to right in Figure 4.

Coffee beverages prepared from coffee solidified products containing 0.3 to 14.4% by mass of finely ground coffee beans (Tests 7 through 11) were globally assessed more favorably as being better in terms of aroma, flavor, smoothness, and roughness compared with the coffee beverage of Test 6, which contained no finely ground coffee beans. The coffee solidified product containing 25.5% by mass of finely ground coffee beans (Test 12) was rated relatively low in terms of smoothness, but was more favorably globally assessed as being better than the beverage of Test 6 in terms of appearance, aroma, and flavor. The coffee beverages prepared by dissolving the coffee solidified products of Tests 7 through 12 in appropriate amounts of water were suitable for drinking.

Production Example 3: Preparation of Coffee Solidified Product Containing Finely Ground Coffee Beans

Coffee beverages were prepared in the same manner as in Production Example 2 by blending finely ground coffee beans with dextrins of varying dextrose equivalent values per the formulations shown in Table 19.
The same finely ground coffee beans as in Production Example 2 were used.
The resulting coffee beverages were poured into resin molds having a volume of 5.54 cm3, and were frozen by being allowed to stand overnight at -30°C. To prevent the frozen coffee beverages from melting, the molds were then placed in a sealable chamber, and the chamber was sealed. The beverages were dried for 2 days at a chamber pressure of 100 Pa or less and a temperature of 30°C, giving coffee solidified products.

[Table 19]

|  | Test 13 | Test 14 | Test 15 | Test 16 |
|---|---|---|---|---|
| Block mass (g/block) | 1.79 | 2.11 | 1.77 | 1.78 |
| Density (g/cm$^3$) | 0.32 | 0.38 | 0.32 | 0.32 |
| Extract solids (g/block) | 0.62 | 0.61 | 0.61 | 0.61 |
| Soluble solids content ratio (mass%) | 34.4 | 29.1 | 34.4 | 34.4 |
| Dextrin DE value | 10~13 | 10~13 | Mixture of 2 types* | 6~8 |
| Dextrin added (g/block) | 1.08 | 1.40 | 1.07 | 1.08 |
| Measured dextrin content (g/block) | 0.47 | 0.61 | 0.46 | 0.47 |
| Dextrin added/extracted solids ratio | 1.8 | 2.3 | 1.8 | 1.8 |
| Dextrin content ratio (mass%) | 26.2% | 28.9% | 26.1% | 26.2% |
| Saccharide content (g/block) | 0.05 | 0.07 | 0.05 | 0.05 |
| Saccharide content ratio (mass%) | 3.0% | 3.3% | 2.9% | 3.0% |
| Finely ground coffee bean content (g/block) | 0.09 | 0.09 | 0.09 | 0.09 |
| Finely ground coffee bean content ratio (mass%) | 5.1% | 4.4% | 5.1% | 5.1% |

(continued)

|  | Test 13 | Test 14 | Test 15 | Test 16 |
|---|---|---|---|---|
| Moldability | × | × | O | O |

*: This was a 1:1 mixture of dextrins having a DE value of 10 to 13 and 2 to 5.

The drying conditions in Production Example 3 are premised on commercial scale production, where the chamber pressure and temperature are higher than, and the conditions in terms of production moldability are more stringent than, Production Example 1 and Production Example 2. Foaming was observed and the moldability was poor in Tests 13 and 14, where dextrins having a dextrose equivalent value of 10 to 13 were used. The moldability was good in Test 16, where a dextrin having a dextrose equivalent value of 6 to 8 was used. In Test 15, two types of dextrins having dextrose equivalent values of 10 to 13 and 2 to 5 were blended in the same weight. The moldability was good in Test 15. These results showed that better moldability could be achieved by ensuring that the dextrose equivalent value is lower than 10 to 13. It was also shown that better moldability can be achieved even when a dextrin having a dextrose equivalent value of 10 to 13 is blended, if combined with a dextrin having a lower dextrose equivalent value. The coffee beverages prepared by dissolving the coffee solidified products of Test 15 and Test 16 in appropriate amounts of water were suitable for drinking.

The beverage solidified products of the present invention allow beverages of a given volume to be provided simply and instantly in response to consumer demand.

The present invention is highly industrially applicable in that, as the concept of environmental conservation continues to gain traction in an attempt to reduce wasteful consumption of the resources used for container materials, the portable use of reusable bottles for personal use and the preparation of beverages using the beverage solidified products of the present invention in such bottles would also help the environment.

The invention is also highly industrially applicable in that green tea beverages of the present invention are sugar-free and better-tasting, and can be easily prepared using the green tea beverage solidified products of the present invention.

The invention is furthermore highly industrially applicable in that the grain tea beverages of the present invention are sugar-free and better-tasting, and can be easily prepared using the grain tea beverage solidified products of the present invention.

The invention is still furthermore highly industrially applicable in that the coffee beverages of the present invention are sugar-free and better-tasting, and can be easily prepared using the coffee beverage solidified products of the present invention.

Several embodiments and/or examples of the present invention have been described in detail above, but it would be easy for a person of ordinary skill in the art to add many alterations to these exemplary embodiments and/or examples without substantially departing from the novel teachings and effects of the present invention. As such, these modifications are encompassed within the scope of the present invention.

All documents described in this Description and the contents of the applications serving as the basis of priority right under the Paris Convention for the present application are incorporated herein by reference.

## Claims

1. A freeze-dried beverage solidified product that is mixed with water or hot water to prepare a beverage,

   said beverage solidified product comprising dextrin, wherein
   the saccharide content of the beverage solidified product is 8.5% by mass or less.

2. A freeze-dried green tea beverage solidified product that is mixed with water or hot water to prepare a green tea beverage,

   said green tea beverage solidified product comprising dextrin and insoluble fine particles of tea raw material, wherein
   the saccharide content of the green tea beverage solidified product is 8.5% by mass or less.

3. The green tea beverage solidified product according to Claim 2, wherein the insoluble fine particles of tea raw material are finely ground tea leaves and/or stems.

4. The green tea beverage solidified product according to Claim 2 or 3, wherein the content of the insoluble fine particles of tea raw material in the green tea beverage solidified product is more than 0% by mass and not more than 30% by mass.

5. The green tea beverage solidified product according to any of Claims 2 through 4, wherein the particle diameter of 90% of the total volume of the insoluble fine particles of tea raw material is 200 um or less.

6. A freeze-dried grain tea beverage solidified product that is mixed with water or hot water to prepare a grain tea beverage,

   said grain tea beverage solidified product comprising dextrin and insoluble fine particles of grain tea raw material, wherein
   the saccharide content of the grain tea beverage solidified product is 6.0% by mass or less.

7. The grain tea beverage solidified product according to Claim 6, wherein the insoluble fine particles of grain tea raw material are the finely ground product of at least one of barley, adlay, buckwheat, black beans, corn, and brown rice.

8. The grain tea beverage solidified product according to Claim 6 or 7, wherein the content of the insoluble fine particles of grain tea raw material in the grain tea beverage solidified product is more than 0% by mass and not more than 10% by mass.

9. The grain tea beverage solidified product according to any of Claims 6 through 8, wherein the density of the grain tea beverage solidified product is 0.20 to 0.40 g/cm$^3$.

10. The beverage solidified product according to any of Claims 6 through 9, wherein the grain tea beverage is barley tea.

11. A freeze-dried coffee beverage solidified product that is mixed with water or hot water to prepare a coffee beverage,

    said coffee beverage solidified product comprising dextrin and finely ground coffee beans, wherein
    the saccharide content of the coffee beverage solidified product is 5.0% by mass or less.

12. The coffee beverage solidified product according to Claim 11, wherein the content of the finely ground coffee beans in the coffee beverage solidified product is 0.3% by mass or more.

13. The coffee beverage solidified product according to Claim 11 or 12, wherein the dextrin content in the coffee beverage solidified product is 11 to 50% by mass.

14. The coffee beverage solidified product according to any of Claims 11 through 13, wherein the dextrin has a dextrose equivalent value of 2 to 30.

15. The coffee beverage solidified product according to any of Claims 11 through 14, wherein the density of the coffee beverage solidified product is 0.17 to 0.50 g/cm$^3$.

16. The beverage solidified product according to any of Claims 1 through 15, wherein the beverage solidified product is formulated into individual single-serving units per a given amount of water or hot water.

17. The beverage solidified product according to any of Claims 1 through 12, 15, and 16, wherein the dextrin content of the beverage solidified product is 0.5 to 40% by mass.

18. The beverage solidified product according to any of Claims 1 through 12 and 15 through 17, wherein the dextrin has a dextrose equivalent value of 2 to 30.

19. The beverage solidified product according to any of Claims 1 through 8 and 10 through 18, wherein the density of the beverage solidified product is greater than 0.13 g/cm$^3$ and less than 0.40 g/cm$^3$.

20. The beverage solidified product according to any of Claims 1 through 19, wherein the volume of the beverage solidified product is 4 to 0.50 g/cm$^3$.

21. The beverage solidified product according to any of Claims 1 through 20, wherein the beverage solidified product is packaged in a moisture-resistant packaging material.

22. The beverage solidified product according to any of Claims 1 through 7, wherein the beverage is green tea, black tea, Oolong tea, grain tea, or coffee.

23. The beverage solidified product according to Claim 8, wherein the grain tea is barley tea.

24. A beverage that is obtained by mixing the beverage solidified product according to any of Claims 1 through 23 with water or hot water.

25. A process for producing a beverage solidified product, comprising

preparing a beverage extract,
mixing dextrin into the beverage extract, and
freeze-drying the resulting mixture,
provided that no saccharides are added throughout the entire process.

26. A process for producing a green tea beverage solidified product, comprising:

preparing a green tea beverage extract;
mixing dextrin and insoluble fine particles of tea raw material into the green tea beverage extract, and
freeze-drying the resulting mixture,
provided that no saccharides are added throughout the entire process.

27. The process for producing a green tea beverage solidified product according to Claim 26, wherein the insoluble fine particles of tea raw material are finely ground tea leaves and/or stems.

28. A process for producing a grain tea beverage solidified product, comprising

preparing a grain tea beverage extract,
mixing dextrin and insoluble fine particles of the grain tea raw material into the grain tea beverage extract, and
freeze-drying the resulting mixture,
provided that no saccharides are added throughout the entire process.

29. The process for producing a grain tea beverage solidified product according to Claim 28, wherein the insoluble fine particles of grain tea raw material are the finely ground product of at least one of barley, adlay, buckwheat, black beans, corn, and brown rice.

30. A process for producing a coffee beverage solidified product, comprising

preparing a coffee beverage extract,
mixing dextrin and finely ground coffee beans into the coffee beverage extract, and
freeze-drying the resulting mixture,
provided that no saccharides are added throughout the entire process.

[Figure 1]

[Figure 2]

[Figure 3]

[Figure 4]

## INTERNATIONAL SEARCH REPORT

| International application No. |
|---|
| **PCT/JP2022/017331** |

| A. | CLASSIFICATION OF SUBJECT MATTER |
|---|---|

*A23F 3/26*(2006.01)i; *A23F 5/24*(2006.01)i; *A23F 5/32*(2006.01)i; *A23L 2/00*(2006.01)i; *A23L 2/38*(2021.01)i
FI:   A23L2/00 W; A23F3/26; A23F5/24; A23F5/32; A23L2/38 D; A23L2/38 K; A23L2/38 M

According to International Patent Classification (IPC) or to both national classification and IPC

| B. | FIELDS SEARCHED |
|---|---|

Minimum documentation searched (classification system followed by classification symbols)

A23F3/26; A23F5/24; A23F5/32; A23L2/00; A23L2/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 3-228646 A (NIKKEN FOOD HONSHA KK) 09 October 1991 (1991-10-09)<br>   claim 1, example 1 | 1-5, 17-19,<br>21-22, 24-27 |
| A | claim 1, example 1 | 6-16, 20, 23, 28-30 |
| X | JP 2002-171905 A (KATSURAYAMA, Yoshiki) 18 June 2002 (2002-06-18)<br>   claims 1, 7, 14, paragraphs [0064]-[0070], [0078] | 1-5, 17-19,<br>21-22, 24-25 |
| A | claims 1, 7, 14, paragraphs [0064]-[0070], [0078] | 6-16, 20, 23, 26-30 |
| X | JP 61-15651 A (SENBA TOUKA KOGYO KK) 23 January 1986 (1986-01-23)<br>   example 1 | 1, 17-19, 21-22, 24-25 |
| A | example 1 | 2-16, 20, 23, 26-30 |
| X | JP 9-275903 A (KYOTO PREF GOV) 28 October 1997 (1997-10-28)<br>   claims 2-3, example 1, paragraph [0022] | 1, 17-19, 21-22, 24-25 |
| A | claims 2-3, example 1, paragraph [0022] | 2-16, 20, 23, 26-30 |

☑ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/017331** |

## C.    DOCUMENTS CONSIDERED TO BE RELEVANT

| Category* | Citation of document, with indication, where appropriate, of the relevant passages | Relevant to claim No. |
| --- | --- | --- |
| X | JP 2015-119657 A (MITSUI NORIN KK) 02 July 2015 (2015-07-02)<br>    claims 1-10, paragraph [0016], example 5 | 1, 17-19, 21-25 |
| A | claims 1-10, paragraph [0016], example 5 | 2-16, 20, 26-30 |
| X | JP 11-196769 A (HAGIWARA, Yoshihide) 27 July 1999 (1999-07-27)<br>    claim 3, example 3 | 1, 16-22, 24-25 |
| A | claim 3, example 3 | 2-15, 23, 26-30 |
| X | JP 11-146 A (SATO SHOKUHIN KOGYO KK) 06 January 1999 (1999-01-06)<br>    claims 1, 3, paragraphs [0009]-[0010], example 1 | 1, 17-19, 21-25 |
| A | claims 1, 3, paragraphs [0009]-[0010], example 1 | 2-16, 20, 26-30 |
| X | JP 2006-320224 A (HOUSE FOODS CORP) 30 November 2006 (2006-11-30)<br>    claims 1-4, examples 5, 7 | 1, 17-19, 21, 24-25 |
| A | claims 1-4, examples 5, 7 | 2-16, 20, 22-23, 26-30 |
| A | JP 2008-178404 A (KAWAI, Motomichi) 07 August 2008 (2008-08-07)<br>    claims 8-9, example 7 | 1-30 |
| A | JP 60-221067 A (TAKEDA YAKUHIN KOGYO KK) 05 November 1985 (1985-11-05)<br>    claims | 1-30 |
| A | JP 2007-259779 A (PLANT GENOME CENTER CO LTD) 11 October 2007 (2007-10-11)<br>    claims | 1-30 |
| A | JP 9-275904 A (UNIE CAFE KK) 28 October 1997 (1997-10-28)<br>    example 2 | 1-30 |

Form PCT/ISA/210 (second sheet) (January 2015)

**INTERNATIONAL SEARCH REPORT**

International application No.

**PCT/JP2022/017331**

| Box No. III | Observations where unity of invention is lacking (Continuation of item 3 of first sheet) |
|---|---|

This International Searching Authority found multiple inventions in this international application, as follows:

For the following reason, this international application includes three inventions which do not comply with the requirement of unity of invention.

(Invention 1) Claims 1-5 and 25-27, and claims 17-24 referring to any of claims 1-5

Document 1 (JP 3-228646 A (NIKKEN FOOD HONSHA KK)) discloses: a "freeze-dried green tea beverage solidified material for preparing a green tea beverage by mixing with water or hot water, wherein the content of saccharides in the green tea beverage solidified material is 8.5 mass%, and insoluble fine particles of the tea raw material are finely ground products of at least one among leaves and stems of tea"; and a "method for producing a green tea beverage solidified material, the method comprising preparing a green tea beverage extracted solution, mixing dextrin in the green tea beverage extracted solution with insoluble fine particles of a tea raw material, and freeze-drying the obtained mixture liquid, wherein the insoluble fine particles of the tea raw material, to which saccharides are not added throughout the production method, are finely ground products of at least one among leaves and stems of tea", and claims 1-3 and 25-27 lack novelty in light of document 1 and thus do not have a special technical feature. However, claim 4, which is dependent on claim 1, has the special technical feature in which the content of the insoluble fine particles of the tea raw material in the green tea beverage solidified material is greater than 0 mass% and at most 30 mass%, and claim 5, and claims 17-24 referring to any of claims 4-5 also have the same technical feature as claim 4. Therefore, claims 1-5 and 25-27, and claims 17-24 referring to any of claims 1-5 are classified as invention 1.

(Invention 2) Claims 6-10 and 28-29, and claims 17-24 referring to any of claims 6-10

Claims 6-10 and 28-29, and claims 17-24 referring to any of claims 6-10 cannot be said to share a same or corresponding technical feature with claims 1-5 and 25-27, and claims 17-24 referring to any of claims 1-5 classified as invention 1.

Moreover, claims 6-10 and 28-29, and claims 17-24 referring to any of claims 6-10 are not substantially identical to or similarly closely related to any of the claims classified as invention 1.

In addition, claims 6-10 and 28-29, and claims 17-24 referring to any of claims 6-10 have the special technical feature of a "freeze-dried grain tea beverage solidified material comprising: dextrin; and insoluble fine particles of a grain tea raw material", and are thus classified as invention 2.

(Invention 3) Claims 11-15 and 30, and claims 17-22 and 24 referring to any of claims 11-15

Claims 11-15 and 30, and claims 17-22 and 24 referring to any of claims 11-15 cannot be said to share a same or corresponding technical feature with either invention 1 or invention 2.

Moreover, claims 11-15 and 30, and claims 17-22 and 24 referring to any of claims 11-15 are not substantially identical to or similarly closely related to any of the claims classified as either invention 1 or invention 2.

Therefore, claims 11-15 and 30, and claims 17-22 and 24 referring to any of claims 11-15 cannot be classified as either invention 1 or invention 2.

In addition, claims 11-15 and 30, and claims 17-22 and 24 referring to any of claims 11-15 have the special technical feature of a "freeze-dried coffee beverage solidified material comprising: dextrin; and finely ground products of coffee beans", and are thus classified as invention 3.

Form PCT/ISA/210 (continuation of first sheet) (January 2015)

**INTERNATIONAL SEARCH REPORT**

International application No.

**PCT/JP2022/017331**

| Box No. III | Observations where unity of invention is lacking (Continuation of item 3 of first sheet) |
|---|---|

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

INTERNATIONAL SEARCH REPORT
Information on patent family members

International application No.

**PCT/JP2022/017331**

| Patent document cited in search report | | | Publication date (day/month/year) | Patent family member(s) | Publication date (day/month/year) |
|---|---|---|---|---|---|
| JP | 3-228646 | A | 09 October 1991 | (Family: none) | |
| JP | 2002-171905 | A | 18 June 2002 | (Family: none) | |
| JP | 61-15651 | A | 23 January 1986 | (Family: none) | |
| JP | 9-275903 | A | 28 October 1997 | (Family: none) | |
| JP | 2015-119657 | A | 02 July 2015 | (Family: none) | |
| JP | 11-196769 | A | 27 July 1999 | (Family: none) | |
| JP | 11-146 | A | 06 January 1999 | (Family: none) | |
| JP | 2006-320224 | A | 30 November 2006 | (Family: none) | |
| JP | 2008-178404 | A | 07 August 2008 | (Family: none) | |
| JP | 60-221067 | A | 05 November 1985 | (Family: none) | |
| JP | 2007-259779 | A | 11 October 2007 | (Family: none) | |
| JP | 9-275904 | A | 28 October 1997 | (Family: none) | |

Form PCT/ISA/210 (patent family annex) (January 2015)

**EP 4 321 031 A1**

**Patent documents cited in the description**

- JP S61152238 A

- JP 2003052316 A